# EUROPEAN PATENT SPECIFICATION

(11) **EP 4 011 678 B1**
(45) Date of publication and mention of the grant of the patent: **13.05.2026**
(21) Application number: 21212653.6
(22) Date of filing: 06.12.2021
(51) Int. Cl.: B60L 3/06, B60L 3/10, B60L 15/10, B60W 40/101, B60W 40/103, B60W 40/11, B60W 40/114

(54) **METHOD AND SYSTEM FOR CONTROLLING A VEHICLE'S ELECTRIC MOTOR OUTPUT**
VERFAHREN UND SYSTEM ZUR STEUERUNG DER LEISTUNG EINES ELEKTROMOTORS EINES FAHRZEUGS
PROCÉDÉ ET SYSTÈME DE CONTRÔLE DE LA SORTIE DU MOTEUR ÉLECTRIQUE D'UN VÉHICULE

(30) Priority: 04.12.2020 US 202063121795 P
(43) Date of publication of application: 15.06.2022
(73) Proprietor: Fox Factory, Inc., Duluth, GA 30097 (US)
(72) Inventor: HAUGEN, David M., Duluth, GA 30097 (US); ALLINGER, Wesley E., Duluth, GA 30097 (US); ERICKSEN, Everet Owen, Duluth, GA 30097 (US); KLAWER, Paul, Duluth, GA 30097 (US); NEGISHI, Nobuhiko, Duluth, GA 30097 (US); FLETCHER, Thomas L., Duluth, GA 30097 (US); SMITH, Jason, Duluth, GA 30097 (US); BROWN IV, William O., GA 30097 (US); BORGERS, Bjoem, Duluth, GA 30097 (US); KENDRICK, Phillip A., Duluth, GA 30097 (US)
(74) Representative: Greaves Brewster LLP

(56) References cited:
- EP-A1- 3 696 070
- WO-A1-2020/016675
- US-A1- 2011 276 216
- US-A1- 2019 126 759
- US-A1- 2019 300 105
- US-B2- 9 845 133

## Description

### CROSS-REFERENCE TO RELATED APPLICATIONS

This application claims priority from U.S. Provisional Patent Application No. 63/121,795 filed on December 4, 2020.

### FIELD OF THE INVENTION

Embodiments of the present technology relate generally a vehicle having an electric motor.

### BACKGROUND

An electric vehicle typically includes a battery and an electric motor. Typically, a particular combination of a battery and an electric motor is selected to provide a specific amount of power or torque for the electric vehicle. As electric vehicles become more widely adopted and find increased use in various environments and activities, conventional battery and electric motor combinations may not provide an appropriate power source. US 2011/276216 A1, US 2019/300105 A1 each discloses method and system for controlling an electric vehicle's electric motor output, said method comprising: obtaining electric vehicle data; obtaining user-related data; receiving input from at least one sensor; and utilizing a controller to evaluate said electric vehicle data, said user-related data, and said input from said at least one sensor, and automatically tailor an output power curve of said electric motor to improve performance for said electric vehicle for a given rate of conservation of a battery provided source of power.

### SUMMARY

Hereafter embodiments refer to embodiments of the disclosure. The invention is defined in the appended claims. According to some embodiments of the disclosure there is provided a method for controlling an electric vehicle's electric motor output. The method may comprise obtaining electric vehicle data. The method may further comprise obtaining user-related data. The method may further comprise receiving input from at least one sensor. The method may further comprise utilizing a controller to evaluate said electric vehicle data, said user-related data, and said input from said at least one sensor. The method may further comprise automatically tailoring an output power curve of an electronic motor to improve performance for said electric vehicle for a given rate of conservation of a battery provided source of power. In some aspects, and as used anywhere herein, improved performance may mean best performance for said electric vehicle.

In an embodiment said at least one sensor may be selected from a group of sensors consisting of: an inclinometer, a pitch sensor, a user's mobile device, an accelerometer, a pressure sensor, and a forward looking sensor.

In an embodiment said obtaining said electric vehicle data may comprise obtaining a size of said electric motor, a size of said battery, an amperage of said battery, and a voltage of said battery.

In an embodiment said obtaining said electric vehicle data may further comprise monitoring said performance of said battery while said electric vehicle is operating. The obtaining may further comprise obtaining at least one updated set of data for said battery based on said monitoring. The obtaining may further comprise automatically updating said tailored output power curve of said electronic motor to obtain said improved performance for said electric vehicle for said given rate of conservation of said battery based on said at least one updated set of data for said battery.

In an embodiment the method may further comprise obtaining route information. The method may further comprise utilizing said controller to evaluate said electric vehicle data, said user-related data, said input from said at least one sensor, and said route information to automatically tailor said output power curve of said electronic motor to obtain said improved performance for said electric vehicle for said given rate of conservation of said battery power.

In an embodiment the method may further comprise setting an assist threshold based on a wattage input generated by a user turning a crank on said electric vehicle. The method may further comprise monitoring a wattage input generated by said user turning said crank on said electric vehicle. The method may further comprise determining that said assist threshold has been met by said user turning said crank on said electric vehicle. The method may further comprise utilizing said controller to increase a level of assistance provided by said electric motor when said assist threshold has been met by said user.

In an embodiment the method may further comprise determining that said assist threshold is no longer being met by said user turning said crank on said electric vehicle. The method may further comprise utilizing said controller to decrease said level of assistance provided by said electric motor.

In an embodiment the method may further comprise determining, based on said input received from said sensor, that said electric vehicle is ascending a hill. The method may further comprise utilizing said controller to automatically increase a level of assistance provided by said electric motor.

In an embodiment the method may further comprise determining, based on said input received from said sensor, that said electric vehicle is going around a corner and has slowed down while going around said corner. The method may further comprise utilizing said controller to automatically increase a level of assistance provided by said electric motor as said electric vehicle exits said corner until said electric vehicle has returned to a pre-corner speed.

In an embodiment the method may further comprise utilizing said controller to control a switch between said electric motor and said battery, wherein said switch will allow said controller to control a power output of said electric motor.

In an embodiment the method may further comprise utilizing said controller to evaluate said electric vehicle data, said user-related data, and said input from said at least one sensor, and automatically tailor said output power curve for a plurality of electronic motors to improve performance for said electric vehicle for said given rate of conservation of said battery. The method may further comprise said controller utilizing a plurality of switches between said plurality of electric motors and said battery to control a power output of one or more of said plurality of said electric motors.

In an embodiment the method may further comprise utilizing said controller to evaluate said electric vehicle data, said user-related data, and said input from said at least one sensor, and automatically tailor said output power curve for at least one electronic motor to improve performance for said electric vehicle for said given rate of conservation of a plurality of batteries. The method may further comprise said controller utilizing a plurality of switches between said at least one electric motor and said plurality of batteries to control a power output of said at least one electric motor.

In an embodiment the method may further comprise determining, based on said input received from said sensor, that said electric vehicle is in a freefall condition. The method may further comprise determining a forward ground speed of said electric vehicle. The method may further comprise utilizing said controller to automatically adjust a level of assistance provided by said electric motor such that a drive wheel is rotating at a speed that is equivalent to a rotational speed said drive wheel would be moving if said electric vehicle was moving forward across said ground at said determined forward ground speed.

According to some embodiments there is provided a system for controlling an electric vehicle's electric motor output. The system may comprise an input to receive data about said electric vehicle. The system may comprise an input to receive a user-related data. The system may comprise at least one sensor to generate sensor information. The system may comprise a controller to evaluate said data about said electric vehicle, said user-related data, and said sensor information from said at least one sensor. The controller may automatically tailor an output power curve for an electronic motor to improve performance for said electric vehicle based on a given rate of conservation of a battery provided source of power.

In an embodiment said at least one sensor may be selected from a group of sensors consisting of: an inclinometer, a pitch sensor, a user's mobile device, an accelerometer, a pressure sensor, and a forward looking sensor.

In an embodiment said data about said electric vehicle may comprise a size of said electric motor, a size of said battery, an amperage of said battery, and a voltage of said battery.

In an embodiment said data about said electric vehicle may further comprise at least one updated set of data for said battery while said electric vehicle is in operation. The controller may be adapted to automatically update said tailored output power curve of said electronic motor to obtain said improved performance for said electric vehicle for said given rate of conservation of said battery based on said at least one updated set of data for said battery.

In an embodiment the system may further comprise an assist threshold based on a wattage input generated by a user turning a crank on said electric vehicle. The system may further comprise a monitor to monitor a wattage input generated by said user turning said crank on said electric vehicle and determine that said assist threshold has been met. The controller may be adapted to increase a level of assistance provided by said electric motor when said monitor has determined that said assist threshold has been met.

In an embodiment the monitor may be adapted to monitor said wattage input generated by said user turning said crank on said electric vehicle and determine that said assist threshold is no longer being met. The controller may be adapted to decrease said level of assistance provided by said electric motor when said monitor has determined that said assist threshold is no longer being met.

In an embodiment the system may further comprise at least one switch between said electric motor and said battery. The at least one switch may be used by said controller to control a power output of said electric motor.

In some embodiments there is a provided an electric vehicle comprising a system as aforesaid, or a system as described anywhere herein, or a system as set out in the appended claims. The electric vehicle may be (but is not limited to) an All-Electric (EV) vehicle, a Fuel Cell Electric Vehicle (FCEV), a Hybrid vehicle, a Plug-in Hybrid vehicle, an e-bike (including but not limited to, Type 1 (Pedal Assist), Type 2 (Throttle Only), and Type 3 (Pedal Assist 28 miles per hour (mph)), a scooter, a motorcycle. a car, a truck, a watercraft, a snow machine, a 3-4 wheeled vehicle, a multi-wheeled vehicle, an all-terrain vehicle (ATV), a utility task vehicle (UTV) or "side-by-side", an aircraft, and the like.

### BRIEF DESCRIPTION OF THE DRAWINGS

Aspects of the present invention are illustrated by way of example, and not by way of limitation, in the accompanying drawings, wherein:
Figure 1 is a schematic block diagram of a single battery switchably coupled to a plurality of electric motors to control the total electric motor output available to be provided to an electric vehicle, in accordance with an embodiment.
Figure 2 is a schematic block diagram of a plurality batteries which are each switchably coupled to a respective electric motor to control the total electric motor output available to be provided to an electric vehicle, in accordance with an embodiment.
Figure 3 is a schematic block diagram of a single battery, capable of generating a plurality of output waveforms, and wherein the plurality of output waveforms are switchably coupled to a single electric motor to control the electric motor output available to be provided to an electric vehicle, in accordance with an embodiment.
Figure 4 is a schematic block diagram of a single battery coupled to a single configurable electric motor to control the electric motor output available to be provided to an electric vehicle, in accordance with an embodiment.
Figure 5 is a graph depicting rider-generated torque during a pedal cycle, in accordance with an embodiment.
Figure 6 is a graph depicting rider-generated torque during the pedal cycle and the amount of power or assist the motor provides during the pedal cycle, in accordance with an embodiment.
Figure 7 is a graph depicting rider-generated torque during the pedal cycle, the amount of power or assist (converted to torque) that the motor provides during the pedal cycle, and the total of the rider-generated torque and motor provided torque during the pedal cycle, in accordance with an embodiment.
Figure 8 is a block diagram of a mobile device, in accordance with an embodiment.
Figure 9 is a block diagram of a mobile device display having a number of inputs shown for the application, including Assist Information, in accordance with an embodiment.
Figure 10 is a graph depicting rider-generated torque during the pedal cycle, the amount of power or assist (converted to torque) that the motor provides during the pedal cycle, and the total of the rider-generated torque and motor provided torque during the pedal cycle, in accordance with an embodiment.
Figure 11 a graph of rider generated power output, threshold power output values, and assist provided by an electric motor of an e-bike in accordance with an embodiment.
Figure 12 a graph of another embodiment of rider generated power output, threshold power output values, and assist provided by an electric motor of an e-bike in accordance with an embodiment.
Figure 13 a graph of still another embodiment of rider generated power output, threshold power output values, and assist provided by an electric motor of an e-bike in accordance with an embodiment.
Figure 14 is a flow diagram for electric vehicle range estimation, in accordance with an embodiment.
Figure 15A is a line diagram side view of an electric vehicle, in accordance with an embodiment.
Figure 15B is a line diagram side view of control system on the electric vehicle of Figure 15A, in accordance with an embodiment.
Figure 16 is a block diagram of a modular control system, shown in accordance with an embodiment.
Figure 17 is block diagram of an example computer system with which or upon which various embodiments of the present invention may be implemented.
Figure 18 is a high-level view of a defined geographic area, in accordance with an embodiment.

The drawings referred to in this description should be understood as not being drawn to scale except if specifically noted.

### DESCRIPTION OF EMBODIMENTS

The detailed description set forth below in connection with the appended drawings is intended as a description of various embodiments of the present invention and is not intended to represent the only embodiments in which the present invention is to be practiced. Each embodiment described in this disclosure is provided merely as an example or illustration of the present invention, and should not necessarily be construed as preferred or advantageous over other embodiments. In some instances, well known methods, procedures, objects, and circuits have not been described in detail as not to unnecessarily obscure aspects of the present disclosure.

### Overview and Nomenclature

The following Description of Embodiments will provide a detailed description of various embodiments of the present invention wherein novel methodologies and systems use, for example, sensed or received vehicle data, rider-related data and/or route information to control the output of an electric motor of an electric vehicle. For purposes of brevity and clarity, the term "electric motor output" refers to, for example, the torque or power provided by an electric motor to an electric vehicle. In some embodiments, the "electric motor output" is comprised of a combination of power contributions from more than one electric motor. For further brevity and clarity, the term "electric vehicle", as used in the below detailed description, is intended to include, but it not limited to, various designations of electric vehicles. Such designations include, for example, All-Electric (EV) vehicles, Fuel Cell Electric Vehicles (FCEV), Hybrid vehicles, Plug-in Hybrid vehicles, and the like. It should further be noted that although various embodiments of the present invention may refer to a particular type of electric vehicle, embodiments of the present invention can pertain to many types of electric vehicles including, but not limited to, an e-bike (including but not limited to, Type 1 (Pedal Assist), Type 2 (Throttle Only), and Type 3 (Pedal Assist 28 miles per hour (mph)), a scooter, a motorcycle, a car, a truck, a watercraft, a snow machine, a 3-4 wheeled vehicle, a multi-wheeled vehicle, an all-terrain vehicle (ATV), a utility task vehicle (UTV) or "side-by-side", an aircraft, and the like.

As apparent from the discussion above, and depending upon the electric vehicle being used, there may be a number of different descriptors used to describe the user of the one or more different embodiments discussed herein. For example, in some cases a rider, driver, operator of the vehicle is the user and, in some cases, it may be a passenger in the vehicle.

In general, a passenger normally refers to a second party on (or in) a vehicle. Often the passenger is not doing the steering and is thus distinguishable from the vehicle controller.

In general, a rider usually refers to a user of a vehicle that is normally ridden in a leg over saddle style (similar to a horse rider) such as a two wheeled vehicle (e.g., bike, e-bike, eScooter, eMoped, motorcycle, eMotorcycle, etc.), a snow machine, a watercraft, some 3-4 and multi-wheeled vehicles, etc.

In general, a driver usually refers to a user of a vehicle that is normally ridden in a sitting-in-a-seat style (similar to a carriage driver) such as a car, truck, UTV, some 3-4 and multi-wheeled vehicles, aircraft, etc. Interestingly, a vehicle operator often is used to identify a user of a construction type vehicle such as a forklift, crane, backhoe, tractor, etc.

Of course, these examples will continue to grow as the electronic motor continues to expand into new and different types of vehicles. In the following discussion, the appropriate names are provided in the examples based on the eVehicle used in the given example. However, for purposes of clarity, it should be appreciated that the term "user" is used herein to generically describe a user of the technology which may encompass one, some, or all of a rider, a driver, a passenger, an operator, and the like.

Furthermore, as is described in detail below, embodiments of the present invention use, for example, sensed or received vehicle data, rider-related data and/or route information to control the output of an electric motor of an electric vehicle for a variety of purposes. The purposes include, but are not limited to, conserving battery life or reducing battery power consumption, controlling or extending electric vehicle range, improving electric vehicle performance, protecting the electric vehicle (or components of the electric vehicle), achieving the best electric vehicle performance, obtaining desired performance for the electric vehicle, controlling electric motor torque, tailoring the power curve of the electric motor, and the like.

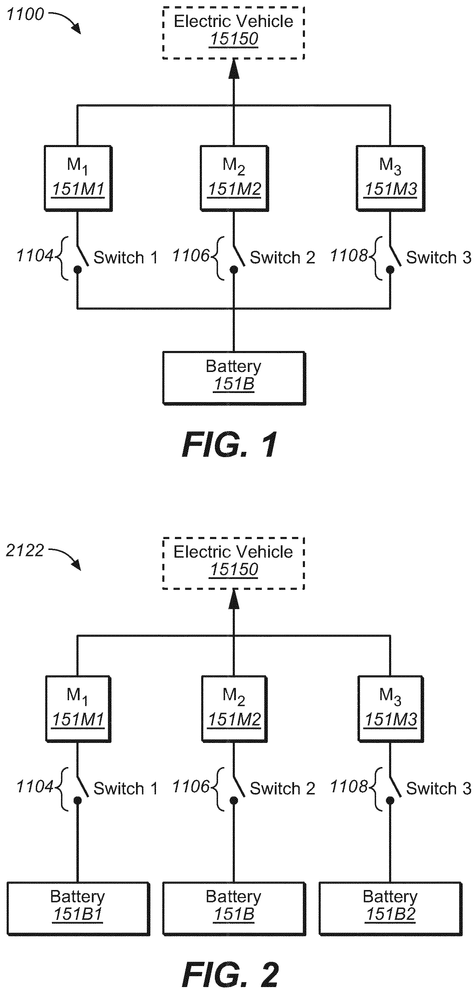

With reference now to Figure 1, a schematic block diagram 1100 shows a single battery 151B switchably coupled to a plurality of electric motors M1 (151M1), M2 (151M2), and M3 (151M3). In Figure 1, electric motors M1 (151M1), M2 (151M2), and M3 (151M3) are schematically depicted as available to provide power to electric vehicle 15150. Figure 1 further schematically illustrates that a switch, switch 1 (1104), is disposed between electric motor M1 (151M1) and battery 151B. Similarly, in Figure 1, a switch, switch 2 (1106), is schematically shown disposed between electric motor M2 (151M2) and battery 151B. Also, Figure 1 schematically illustrates that a switch, switch 3 (1108), is disposed between electric motor M3 (151M3) and battery 151B.

Referring still to Figure 1, when switch 1 (1104) is closed, electric motor M1 (151M1) receives power from battery 151B, and, as a result, motor M1 (151M1) is available to provide power to electric vehicle 15150. Similarly, when switch 2 (1106) is closed, electric motor M2 (151M2) receives power from battery 151B, and, as a result, motor M2 (151M2) is available to provide power to electric vehicle 15150. Also, when switch 3 (1108) is closed, electric motor M3 (151M3) receives power from battery 151B, and, as a result, motor M3 (151M3) is available to provide power to electric vehicle 15150. In embodiments of the present invention, each of switch 1 (1104), switch 2 (1106) and switch 3 (1108) can be operated independently of the other two switches. As depicted in Figure 1, when switch 1 (1104), switch 2 (1106) and switch 3 (1108) are concurrently closed, all three of electric motors M1 (151M1), M2 (151M2), and M3 (151M3) are available to provide power to electric vehicle 15150. Conversely, when switch 1 (1104), switch 2 (1106) and switch 3 (1108) are concurrently open, none of the three of electric motors M1 (151M1), M2 (151M2), and M3 (151M3) are able to provide power to electric vehicle 15150. As an analogy, each of switch 1 (1104), switch 2 (1106) and switch 3 (1108) can be thought of as a "valve" that either allows or prevents power flow between battery 151B and a respective one of electric motors M1 (151M1), M2 (151M2), and M3 (151M3).

As stated above, and as will be described in this Description of Embodiments in detail further below, the novel methodologies and systems of the present embodiments use, for example, sensed or received vehicle data, rider-related data and/or route information to independently control the operation of (e.g., to open or close) of each of switch 1 (1104), switch 2 (1106) and switch 3 (1108). In so doing, embodiments of the present invention selectively control which of electric motors M1 (151M1), M2 (151M2), and M3 (151M3) can receive power from battery 151B. That is, embodiments of the present invention enable none, one, or any combination of more than one of electric motors M1 (151M1), M2 (151M2), and M3 (151M3) to receive power from battery 151B. Hence, embodiments of the present invention enable, none, one, or any combination of more than one of electric motors M1 (151M1), M2 (151M2), and M3 (151M3) to be available to provide power to electric vehicle 15150. In embodiments of the present invention, a switch relay and a corresponding switch relay circuit, such as, for example, a logic controlled switch relay circuit, comprise at least a portion of switch 1 (1104), switch 2 (1106) and switch 3 (1108). In one such embodiment of the present invention, sensed or received vehicle data, rider-related data and/or route information is used in combination with a corresponding truth table to provide input to, or control operation of, the logic controlled switch relay circuit.

With reference now to Figure 1, a schematic block diagram 1100 shows a single battery 151B switchably coupled to a plurality of electric motors M1 (151M1), M2 (151M2), and M3 (151M3). In Figure 1, electric motors M1 (151M1), M2 (151M2), and M3 (151M3) are schematically depicted as providing power to electric vehicle 15150. Figure 1 further schematically illustrates that a switch, switch 1 (1104), is disposed between electric motor M1 (151M1) and battery 151B. Similarly, in Figure 1, a switch, switch 2 (1106), is schematically shown disposed between electric motor M2 (151M2) and battery 151B. Also, Figure 1 schematically illustrates that a switch, switch 3 (1108), is disposed between electric motor M3 (151M3) and battery 151B.

Referring still to Figure 1, when switch 1 (1104) is closed, electric motor M1 (151M1) receives power from battery 151B, and, as a result, motor M1 (151M1) is available to provide power to electric vehicle 15150. Similarly, when switch 2 (1106) is closed, electric motor M2 (151M2) receives power from battery 151B, and, as a result, motor M2 (151M2) is available to provide power to electric vehicle 15150. Also, when switch 3 (1108) is closed, electric motor M3 (151M3) receives power from battery 151B, and, as a result, motor M3 (151M3) is available to provide power to electric vehicle 15150. In embodiments of the present invention, each of switch 1 (1104), switch 2 (1106) and switch 3 (1108) can be operated independently of the other two switches. As depicted in Figure 1, when switch 1 (1104), switch 2 (1106) and switch 3 (1108) are concurrently closed, all three of electric motors M1 (151M1), M2 (151M2), and M3 (151M3) are available to provide power to electric vehicle 15150. Conversely, when switch 1 (1104), switch 2 (1106) and switch 3 (1108) are concurrently open, none of the three of electric motors M1 (151M1), M2 (151M2), and M3 (151M3) are able to provide power to electric vehicle 15150. As an analogy, each of switch 1 (1104), switch 2 (1106) and switch 3 (1108) can be thought of as a "valve" that either allows or prevents power flow between battery 151B and a respective one of electric motors M1 (151M1), M2 (151M2), and M3 (151M3). Thus, operation of the "valves" (e.g., switch 1 (1104), switch 2 (1106) and switch 3 (1108)) can be used to "tailor" the power output by, and corresponding consumption of power from, battery 151B.

As stated above, and as will be described in this Description of Embodiments in detail further below, the novel methodologies and systems of the present embodiments use, for example, sensed or received vehicle data, rider-related data and/or route information to independently control the operation of (e.g., to open or close) of each of switch 1 (1104), switch 2 (1106) and switch 3 (1108). In so doing, embodiments of the present invention selectively control which of electric motors M1 (151M1), M2 (151M2), and M3 (151M3) can receive power from battery 151B. That is, embodiments of the present invention enable none, one, or any combination of more than one of electric motors M1 (151M1), M2 (151M2), and M3 (151M3) to receive power from battery 151B. Hence, embodiments of the present invention enable, none, one, or any combination of more than one of electric motors M1 (151M1), M2 (151M2), and M3 (151M3) to be available to provide power to electric vehicle 15150. Thus, embodiments of the present invention utilize sensed or received vehicle data, rider-related data and/or route information to ultimately control the "electric motor output" provided and/or available to electric vehicle 15150.

In embodiments of the present invention, a switch relay and a corresponding switch relay circuit, such as, for example, a logic controlled switch relay circuit, comprise at least a portion of switch 1 (1104), switch 2 (1106) and switch 3 (1108). In one such embodiment of the present invention, sensed or received vehicle data, rider-related data and/or route information (all of which are described in detail below) are used in combination with a corresponding truth table to provide input to, or control operation of, the logic controlled switch relay circuit.

With reference next to Figure 2, a schematic block diagram 2122 depicts a plurality batteries 151B1, 151B, and 151B2 which are each switchably coupled to a single electric motor M1 (151M1), M2 (151M2), and M3 (151M3), respectively, to control the total electric motor output available to be provided to an electric vehicle 15150, in accordance with embodiments of the present invention. Figure 2 further schematically illustrates that a switch, switch 1 (1104), is disposed between electric motor M1 (151M1) and battery 151B1. Similarly, in Figure 2, a switch, switch 2 (1106), is schematically shown disposed between electric motor M2 (151M2) and battery 151B. Also, Figure 2 schematically illustrates that a switch, switch 3 (1108), is disposed between electric motor M3 (151M3) and battery 151B. Hence, in the embodiment schematically depicted in Figure 2, rather than sharing, or being coupled to, the same single battery, each of electric motors electric motor M1 (151M1), M2 (151M2), and M3 (151M3) can be switchably coupled with its own dedicated battery 151B1, 151B, and 151B2, respectively.

For purposes of brevity and clarity, the embodiment of Figure 2 operates in a manner similar to the embodiment of Figure 1, wherein sensed or received vehicle data, rider-related data and/or route information is used to independently control the operation of (e.g., to open or close) of each of switch 1 (1104), switch 2 (1106) and switch 3 (1108). In so doing, embodiments of the present invention selectively control which of electric motors M1 (151M1), M2 (151M2), and M3 (151M3) can receive power from their respective battery. That is, embodiments of the present invention enable none, one, or any combination of more than one of electric motors M1 (151M1), M2 (151M2), and M3 (151M3) to receive power. Hence, embodiments of the present invention enable, none, one, or any combination of more than one of electric motors M1 (151M1), M2 (151M2), and M3 (151M3) to be available to provide power to electric vehicle 15150. In embodiments of the present invention, a switch relay and a corresponding switch relay circuit, such as. for example, a logic controlled switch relay circuit, comprise at least a portion of switch 1 (1104), switch 2 (1106) and switch 3 (1108). In one such embodiment of the present invention, sensed or received vehicle data, rider-related data and/or route information is used in combination with a corresponding truth table to provide input to, or control operation of, the logic controlled switch relay circuit.

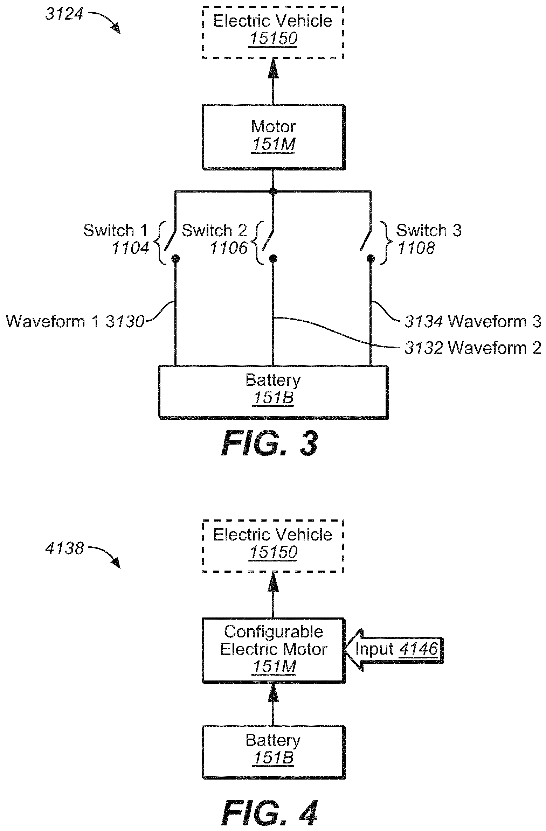

With reference now to Figure 3, a schematic block diagram 3124 illustrates a single battery 151B which is capable of generating a plurality of output waveforms, waveform 1 (3130), waveform 2 (3132), and waveform 3 (3134). The plurality of output waveforms, waveform 1 (3130), waveform 2 (3132), and waveform 3 (3134), can be switchably provided to a single electric motor 151M. Similar to the above-described detailed description pertaining to the embodiments of Figures 1 and 2, in the embodiment of Figure 3, switches, switch 1 (1104), switch 2 (1106), and switch 3 (1108), are disposed between electric motor 151M and battery 151B.

For purposes of brevity and clarity, the embodiment of Figure 3 operates in a manner similar to the embodiment of Figures 1 and 2, wherein sensed or received vehicle data, rider-related data and/or route information is used to independently control the operation of (e.g., to open or close) of each of switch 1 (1104), switch 2 (1106) and switch 3 (1108). In so doing, embodiments of the present invention selectively control which of the plurality of output waveforms, waveform 1 (3130), waveform 2 (3132), and waveform 3 (3134), are provided to electric motor 151M. That is, embodiments of the present invention enable none, one, or any combination of more than one of the plurality of output waveforms, waveform 1 (3130), waveform 2 (3132), and waveform 3 (3134), to provide power to electric motor 151M to receive power. Hence, embodiments of the present invention enable, a single battery source to provide a varying amounts of power to electric motor 151M. As a result, the amount of power which electric motor 151M can provide to electric vehicle 15150 can be varied. In embodiments of the present invention, a switch relay and a corresponding switch relay circuit, such as, for example, a logic controlled switch relay circuit, comprise at least a portion of switch 1 (1104), switch 2 (1106) and switch 3 (1108). In one such embodiment of the present invention, sensed or received vehicle data, rider-related data and/or route information is used in combination with a corresponding truth table to provide input to, or control operation of, the logic controlled switch relay circuit.

Figure 4 is a schematic block diagram 4138 of a single battery 151B coupled to a single configurable electric motor 151M. In the embodiment of Figure 4, sensed or received vehicle data, rider-related data and/or route information is used to control the operation of configurable electric motor 151M. More specifically, as depicted by Input arrow 4146 in Figure 4, embodiments of the present invention utilize the sensed or received vehicle data, rider-related data and/or route information to generate an input to control configurable electric motor 151M. In some embodiments, configurable electric motor 151M is a clutched electric motor. In other embodiments, configurable electric motor 151M is coupled to a gearbox, or similar, to control the power available to electric vehicle 15150. In still another embodiment, configurable electric motor 151M has at least some portion of its windings/coils configured to be selectively used, or not used, during operation of configurable electric motor 151M. For purposes of brevity and clarity, the embodiment of Figure 4 operates in a manner similar to the embodiments of Figures 1, 2 and 3, wherein sensed or received vehicle data, rider-related data and/or route information is used to independently control the operation of configurable electric motor 151M, and thereby control the amount of power which configurable electric motor 151M is able to make available to electric vehicle 15150. In embodiments of the present invention, Input 4146 controls a switch relay and a corresponding switch relay circuit, such as, for example, a logic controlled switch relay circuit, which, in turn, controls operation of configurable electric motor 151M. In one such embodiment of the present invention, sensed or received vehicle data, rider-related data and/or route information is used in combination with a corresponding truth table to provide input to, or control operation of, the logic controlled switch relay circuit.

It should further be noted, that various embodiments of the present invention utilize a combination of the various features or approaches described in Figures 1-4.

### Tailoring Electric Motor Output to Correspond to E-Bike Rider Activity and/or E-Bike Rider Input

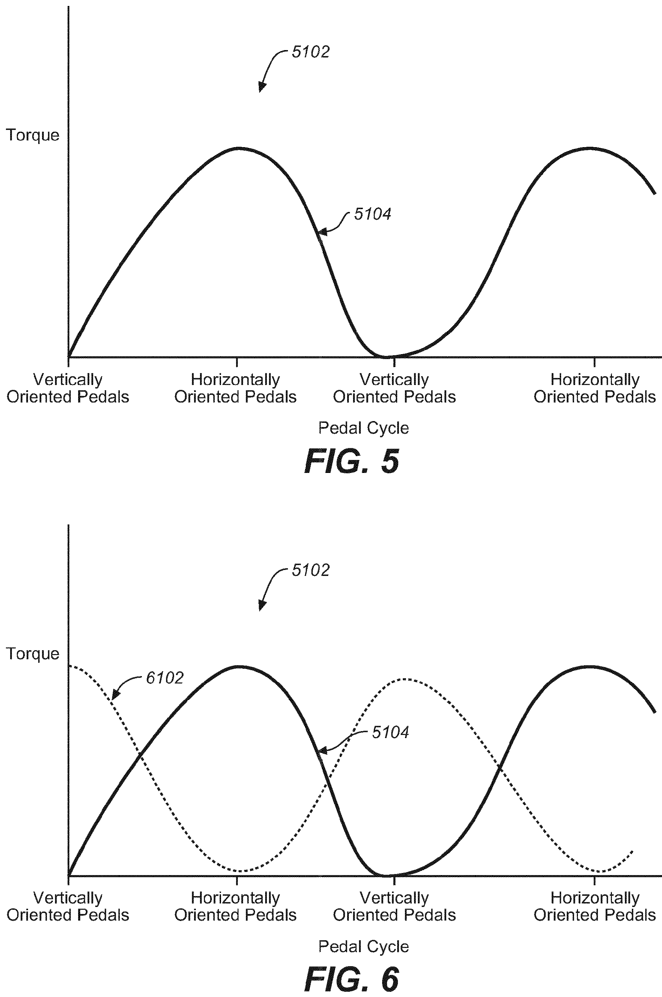

When pedaling a bicycle (such as, for example, an e-bike), the amount of torque that the rider is able to generate will vary during a complete cycle of the pedals. Specifically, when the pedals are in a nearly horizontal arrangement, the rider is able to generate the greatest amount of torque. Conversely, when the pedals are in a nearly vertical arrangement, the bike rider is able to generate much less torque. Referring now to Figure 5, a graph 5102 depicts rider-generated torque during a pedal cycle. Specifically, line 5104 illustrates that rider-generated torque is the greatest as the pedals are at or near a horizontally oriented position. Line 5104 further illustrates that rider-generated torque is the least when the pedals are at, or near, a vertically oriented position.

In various other embodiments of the present invention, the suspension of the electric vehicle is also adjusted to correspond to the activity of the electric motor of the electric vehicle. For example, in one embodiment, the suspension of the electric vehicle is adjusted using an active valve to adjust the suspension to correspond to the amount of assist provided by the electric motor of the electric vehicle.

In embodiments of the present invention, the output from an electric motor, such as, for example, motor M1 (151M1) of Figure 1 provided to an e-bike, is tailored to compensate for the differences in rider-generated torque during pedal cycles. Referring now to Figure 6, graph 5102 has been augmented to include dotted line 6102. Dotted line 6102 indicates the amount of power (also referred to as the "amount of assist") motor M1 (151M1), of the e-bike, provides during the pedal cycle in one embodiment of the present invention. For purposes of clarity and for comparison to line 5104, the values for power/assist provided by motor M1 (151M1) and depicted by dotted line 6102, are converted to a torque value which is normalized with the rider-generated torque values (line 5104).

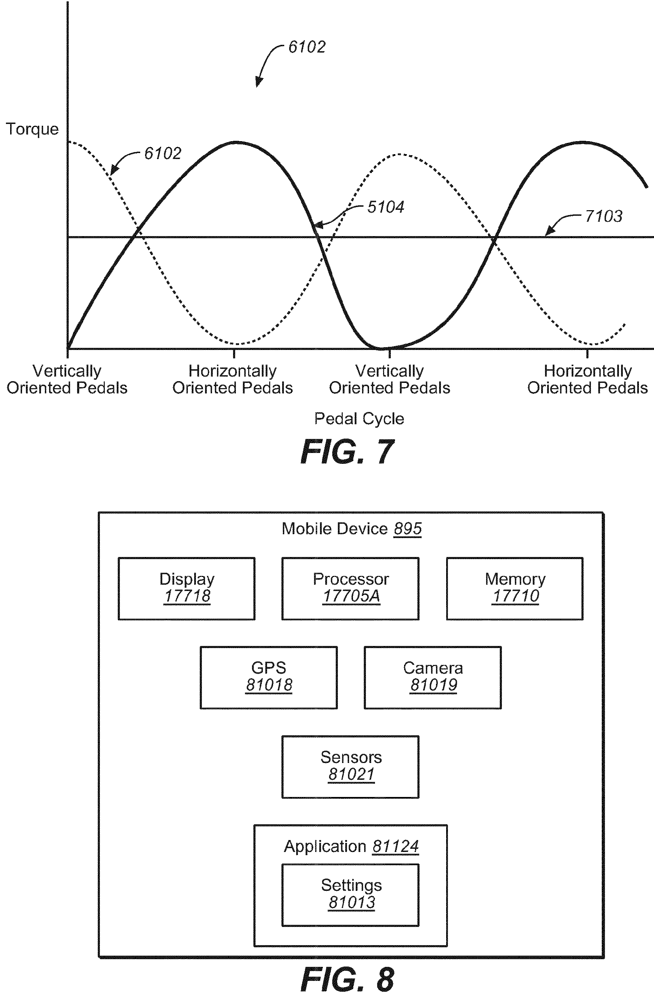

Referring again to Figure 6, it can be seen that in the present embodiment, motor M1 (151M1), of the e-bike, provides the greatest amount of assist when the e-bike rider generates the least amount of torque. Conversely, motor M1 (151M1), of the e-bike, provides the least amount of assist when the e-bike rider generates the greatest amount of torque. As a result, embodiments of the present invention tailor the output or assist from motor M1 (151M1), of the e-bike, to reduce or eliminate torque variations during a pedal cycle. In some embodiments, vehicle data such as, for example, crank position is sensed and used to control motor M1 (151M1) of the e-bike such that the appropriate amount of assist is delivered from motor M1 (151M1) to the e-bike. The torque flattening or torque normalizing aspects of the present embodiment are illustrated by line 7103 of Figure 7 which shows the resulting total of the rider-generated torque and motor provided torque during the pedal cycle. As shown in Figure 7103 of Figure 7, the resulting total torque (i.e., the combination of the rider-generated torque and the motor provided torque) remains constant during the pedal cycle. In some embodiments, the motor enables the average output of the system to equal the peak output of the rider.

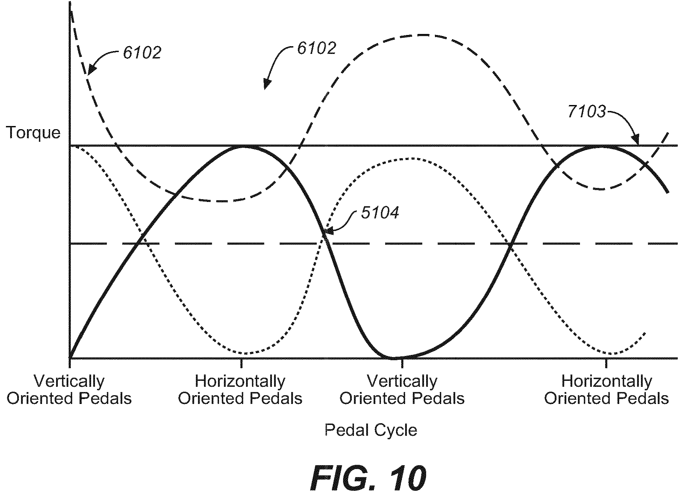

Referring now to Figure 10, a figure similar to Figure 7 is provided, illustrating an embodiment in accordance with the present invention where the 6102 e-assist line is translated upwards such that the average output of the pedal stroke (7103) is at the peak of unassisted rider output.

By eliminating the torque variations as described above, embodiments of the present invention reduce the force output variations of the rear, or driven, tire (or tires) of the e-bike. Such a normalized torque, and corresponding force output, is often particularly advantageous when riding an e-bike on surfaces with reduced traction. For example, a consistent force on the driven tire can prevent wheel slippage, rutting of a muddy trail, increase traction during uphill riding, and provide the rider with an improved riding experience. It should be noted that in some circumstances, it may be advantageous to not have a consistent force on the driven tire. For example, some riders may find that a varied force output on the driven tire provides an increased "bite" or traction during particularly aggressive hill climbs and on various surfaces. As a result, some embodiments of the present invention tailor the output or assist from motor M1 (151M1), of the e-bike, to create or increase torque variations during a pedal cycle. Such embodiments are particularly beneficial when torque smoothing features such as, for example, an elliptical chainring are used on the e-bike.

In other embodiments of the present invention, the output of electric motor of the e-bike is controlled based rider-related data. In one such embodiment, motor M1 (151M1), of the e-bike provides assist when the sensed rider-related data indicates slippage of the rear wheel. For example, in one embodiment, a power meter monitors the rider's power output. If the amount of power output increases or decreases more than a specified amount, motor M1 (151M1) of the e-bike is controlled, based upon such rider-related data, to provide an appropriate amount of assist. Furthermore, various embodiments of the present invention utilize sensed vehicle data, such as measurements obtained at the hub or wheel crank of the e-bike to control motor M1 (151M1) of the e-bike. Such vehicle data measurements include, but are not limited to, detecting spikes in the rider's pedal cadence. If a rider's pedal cadence is detected to have increased or decreased more than a specified amount, motor M1 (151M1) of the e-bike is controlled, based upon such sensed vehicle data, to provide an appropriate amount of assist.

In other embodiments of the present invention, the e-bike rider utilizes an application to set up a desired profile for motor M1 (151M1) of the e-bike to provide "assist" only during certain conditions during a ride. For example, in one embodiment, the rider specifies that motor M1 (151M1) provides assist only when the rider is riding in a standing position and the e-bike is climbing at or above a certain inclination gradient. Embodiments present invention enable the e-bike rider to selectively and specifically define "Assist Information". That is, in embodiments of the present invention, the rider uses an application to define the circumstances (e.g., e-bike state, rider position, terrain conditions, and the like) during which M1 (151M1) provides assist (or increases the amount of assist) to the e-bike. In so doing, embodiments of the present invention allow the rider to control the assist from M1 (151M1) such that M1 (151M1) only provides assist when desired. Hence, in some embodiments, the rider may specify that M1 (151M1) provides only a small amount of assist until specified conditions occur. Additionally, in some embodiments, the rider may specify that M1 (151M1) provides absolutely no assist until specified conditions occur. Thus, in such embodiments, route information is used to control the amount of assist provided to the e-bike by motor M1 (151M1).

By allowing the rider to define the circumstances (e.g., e-bike state, rider position, terrain conditions, and the like) during which M1 (151M1) provides assist, embodiments of the present invention prevent M1 (151M1) from providing assist when the rider doesn't want or need assist from M1 (151M1). In such an embodiment, any one or more of sensed vehicle data, rider-related data, and route information can be used to control the amount of assist provided by motor M1 (151M1) of the e-bike. Hence, embodiments of the present invention allows for an e-bike to operate effectively with a smaller electric motor, as the electric motor is only occasionally required to provide the e-bike with high power or assist. Additionally, because the embodiments of the present invention enable the rider to define, or limit, the circumstances during which M1 (151M1) provides assist to the e-bike, the e-bike has less battery power consumption. Hence, embodiments of the present invention enable to an e-bike to operate effectively with a smaller battery, as the battery is only occasionally required to provide power to the motor. Hence, embodiments of the present invention enable an e-bike to operate effectively with a lighter total weight (smaller/lighter battery and smaller/lighter motor) still provide the user with desired assist throughout a ride.

In embodiments of the present invention, the e-bike rider utilizes an application on the rider's mobile device to set up a desired profile for motor M1 (151M1) of the e-bike to provide "assist" only during certain conditions during a ride. With reference now to Figure 8, a mobile device 895 on which an application can be operated by a rider in accordance with the present invention is shown. In general, mobile device 895 is an example of a smart device that is available for a rider. Mobile device 895 can be a mobile phone, a smart phone, a tablet, a smart watch, a piece of smart jewelry, smart glasses, or other user portable devices having wireless connectivity. For example, mobile device 895 would be capable of broadcasting and receiving via at least one network, such as, but not limited to, WiFi, Cellular, Bluetooth, NFC, and the like. In one embodiment, mobile device 895 includes a display 17718, a processor 17705A, a memory 17710, a GPS 81018, a camera 81019, and the like. It should be noted that memory 17710, GPS 81018, and camera 81019 are particularly well-suited to use in embodiments of the present invention which utilize route information to control the output of the motor of the e-bike. In one embodiment, location information can be provided by GPS 81018. In one embodiment, the location information could be enhanced by the broadcast range of an identified beacon, a WiFi hotspot, overlapped area covered by a plurality of mobile telephone signal providers, or the like. In one embodiment, instead of using GPS information, the location of mobile device 895 may be determined within a given radius, such as the broadcast range of an identified beacon, a WiFi hotspot, overlapped area covered by a plurality of mobile telephone signal providers, or the like. In one embodiment, geofences are used to define a given area and an alert or other indication is made when the mobile device 895 enters into or departs from a geofence.

Mobile device 895 includes sensors 81021 which can include one or more of audio, visual, motion, acceleration, altitude, GPS, and the like. Mobile device 895 also includes a mobile device application 81124 which is an electronic application that operates on mobile device 895. Mobile device application 81124 includes settings 81013. Although settings 81013 are shown as part of mobile device application 81124, it should be appreciated that settings 81013 could be located in a different application operating on mobile device 895, at a remote storage system separate from mobile device 895, or the like.

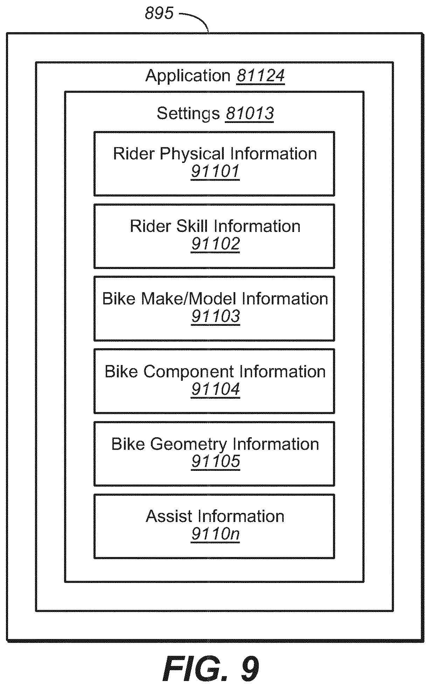

Referring now to Figure 9, a block diagram of a display mobile device 895 having a number of inputs are shown for the mobile device application 81124 in accordance with an embodiment. In general, the mobile device application 81124 operates on mobile device 895 and uses the communication capabilities of mobile device 895 to communicate with and control a battery, a motor, or both, of an e-bike. The communication could be Bluetooth, near field communication (NFC), WiFi, or any other available wireless communication. In one embodiment, the communication could be wired if the mobile device 895 is mounted on the e-bike.

In one embodiment, the mobile device application 81124 receives input information to help establish the settings 81013 during which a rider desires assist from the e-bike motor. In one embodiment, the information input to settings 81013 includes, a rider's physical information 91101 which could include one or a combination of features such as rider height, weight, gender, age, body mass, body type, fitness level, heart rate, and the like. Rider skill information 91102, e.g., beginner, intermediate, advanced, professional, etc., or rider motivation (e.g., fun ride, race, workout, etc.), and the like (i.e., rider-related data). E-bike make model information 91103, such as, bike manufacturer, bike model, bike use type (e.g., road, gravel, mountain, BMX, etc.), bike motor and component information 91104 such as, one or more components on the bike (full suspension, half suspension, gearing, weight, tires, wheels, manufacturer of components, etc.), and the like (i.e., vehicle data).

Moreover, the input information to the mobile device application 81124 includes bike geometry information 91105 such as: seat height setting, seat pitch, seat offset, crank arm length, wheel diameter, handlebar width, handlebar offset (fore or aft), pedal type, and the like. Further, in embodiments of the present invention, Assist Information 9110n is included as a category of the inputs. In one embodiment, the inputs could be more or fewer of the above categories, could be different categories, could be user selectable, application driven, and the like. The use of the described categories herein is provided as one embodiment.

In one embodiment, some or all of the above information could be obtained by user input, by communication between the user's mobile device 895 and a networked device such as a scale, smart watch or other smart jewelry that monitors one or more user's biometrics (e.g., heart rate, body mass, temperature, etc.), one or more sensors on the vehicle, or the like. In one embodiment, the information could be obtained by an image capture device (such as a camera) that obtains an image of the bike, a bike component, a 1D or 2D code on the bike or bike component, and the like. In one embodiment, the captured image(s) are then evaluated by the mobile device application 81124 (or other recognition capability) to make one or more bike specific measurement determinations therefrom, make one or more bike part specific component brand/model/year determination(s), make one or more bike brand/model/year determination(s), make one or more bike geometric determination(s) (e.g., seat height-from ground, seat height-from cranks, etc.; wheel diameter, type/brand/wear of tires, and the like).

In one embodiment, mobile device application 81124 allows the user to search, select, and upload one or more factory and/or customer assist parameters.

In one embodiment, mobile device application 81124 can provide the rider with the assist profiles that correlate with one or more of the rider inputs provided to settings 81013. For example, there may be many assist profiles stored in the factory database. In one embodiment, instead of the user manually selecting from the many assist profiles, mobile device application 81124 will use the user inputs to automatically narrow the number of assist profiles down to only those that meet the user input criteria. For example, novice assist profiles, expert assist profiles, bike model/brand assist profiles, and the like.

In one embodiment, mobile device application 81124 can also perform system diagnostics on the e-bike, can provide firmware updates to one or more components of the e-bike, and the like.

In one embodiment, mobile device application 81124 on mobile device 895 can communicate directly with the e-bike and then provide the information to the rider via the mobile device display. The rider is then able to utilize mobile device application 81124 to define the circumstances (e.g., e-bike state, rider position, terrain conditions, and the like) during which M1 (151M1) is desired to provide assist to the e-bike.

In one embodiment, the controller automatically adapts the power output of the electric motor based solely on sensory input. That is, in such an embodiment, the controller determines the rider's output by subtracting the electric motor power contribution, and adjusts thresholds and motor output to correspond.

### Electric Motor Braking, Regenerative Braking and Negative Motor Assist

Many of the various embodiments of the present invention describe using vehicle data, rider-related data and/or route information to control electric motor output to assist the electric vehicle. That is, many of the present embodiments control that amount of electric motor output that is used to move, or help move, the electric vehicle forward. As will be described below, various embodiments of the present invention, also use vehicle data, rider-related data and/or route information to control the electric motor to resist, or help resist, the electric vehicle from moving forward. Various embodiments of the present invention have high applicability to both front-drive e-bikes (with hub motors), or e-bikes that have multiple motors. In these cases, the ability to manage some or all braking via regen is entirely possible with mechanical braking only under extreme scenarios. As will be described below, hub-motors would allow for the controller/motor to handle both anti-lock-braking as well as traction control.

In one embodiment of the present invention, the electric motor is used to help slow an electric vehicle. Such action by the electric motor can be referred to as "motor braking". In various embodiments of the present invention, electric motor braking is used to slow an electric vehicle when, for example, the electric vehicle is descending an inclined terrain. In various embodiments of the present invention, sensed vehicle data such as, but not limited to, inclination of the electric vehicle indicating a "downhill" movement, speed of the electric vehicle, brake activation, and the like are used to control the electric motor to induce motor braking and help to slow the electric vehicle. The various motor braking embodiments of the present invention are well suited for use with, for example, the plurality of electric motors M1 (151M1), M2 (151M2), and M3 (151M3) of Figures 1 and 2. Similarly, the present motor braking embodiments are well suited to use with the single electric motor 151M of Figure 3 and the single configurable electric motor 151M of Figure 4. In various embodiments of the present invention, disc-brake pressure is sensed, and when the pressure on disc-brake exceeds a certain value, the e-bike engages motor braking to assist with the braking requirements. This could be accomplished with a brake pressure sensor and valve in line with the hydraulic system, or by using a strain gauge on the lever itself. Additionally, it should be noted that "motor braking" can do double-duty as an anti-lock braking system (e.g., in the case of a hub motor).

In various other embodiments, vehicle data such as, for example, information received from an inclinometer on the electric vehicle is used engage motor braking. Embodiments of the present invention are particularly well suited to use, for example, in a road e-bike in which the electric motor disposed in the rear hub of the road e-bike. The hub-motor would allow direct control to vehicle resistance, downstream of the freehub. Regen/braking with the motor upstream of the freehub is less desirable. A dual-motor/multi-motor or front-drive e-bike is extraordinarily well suited to such an embodiment.

In other embodiments, motion of the electric vehicle is used to cause the electric motor to recharge the battery. Using motion of the electric vehicle to cause the electric motor to recharge the battery is often referred to as "regenerative braking". In various embodiments of the present invention, vehicle data such as, for example, the electric vehicle's disc-brake pressure is sensed, and when the pressure on disc-brake exceeds a certain value, the electric vehicle causes the electric motor to reverse its rotational direction such that the electric motor provides resistance to forward motion of the electric vehicle and such that the electric motor generates a charge which can be used to recharge the battery. In various embodiments, vehicle data such as, for example, information received from an inclinometer on the electric vehicle is used initiate the regenerative braking process. Embodiments of the present invention are particularly well suited to use, for example, in a road e-bike in which the electric motor is disposed in the rear hub of the road e-bike.

The various regenerative braking embodiments of the present invention are well suited to causing one or more of the plurality of electric motors M1 (151M1), M2 (151M2), and M3 (151M3) to recharge battery 151B of Figure 1. Furthermore, the various regenerative braking embodiments of the present invention are well suited to causing one or more of the electric motors M1 (151M1), M2 (151M2), and M3 (151M3) to recharge battery 151B1, battery 151B, and battery 151B2, respectively, of Figure 2. Similarly, the present regenerative braking embodiments are well suited to causing electric motor 151M to recharge battery 151B of Figure 3. Likewise, the present regenerative braking embodiments are well suited to causing configurable electric motor 151M to recharge battery 151B of Figure 4.

For purposes of the present discussion, using the electric motor to resist, or help resist, the electric vehicle from moving forward is herein occasionally referred to as "negative assist". Inducing loads from the motor. In various embodiments, the present invention is able to control the electric motor to induce, for example, resistance to an e-bike. In one such embodiment, the induced resistance enables an e-bike to be used a "trainer" for either indoor stationary use or for outdoor riding. Such embodiments of the present invention enable the e-bike to simulate varying conditions, or adjust the required rider's experience on the e-bike to achieve certain objectives. For example, embodiments of the present invention utilize the electric motor to provide negative assist to obtain a desired rider calorie output, rider heartrate, rider power output, prevent the rider from exceeding a particular speed, simulate hill climbing in a flat environment, utilizing the negative assist to recharge the battery to increase the range of the e-bike to accommodate, for example, positive assist on the rider's return ride. In one such embodiment, the rider would maintain a single gear, and the controller would adjust positive/negative assist of the electric motor in response to a given profile. In such an embodiment, the profile can be pre-generated/downloaded, or created by the rider. Such embodiments are well suited, for example, to training for a mountain race while in Kansas with no hill access, or rehab/physical therapy recovery rides.

Various embodiments of the present invention also utilize the electric motor to provide negative assist to prevent unwanted use or theft of the e-bike. For example, some e-bikes weigh many tens of pounds, and with negative motor assist, various embodiments of the present invention render pedaling of the e-bike feasible for only a very short distance and impractical for a longer distance. Certain embodiments of the present invention refer to such limited feasible range of pedaling as a "valet mode". Other embodiments of the present invention control the electric motor to provide increased negative assist to render the e-bike completely or nearly "un-pedalable" or even unable to be pushed or rolled. Such a condition can be referred to as an "anti-theft" mode. In various embodiments of the present invention, a rider manually places the e-bike in such a valet or anti-theft mode. In other embodiments, a rider uses an application such as mobile device application 81124 of Figure 8 to place the e-bike in a desired valet or anti-theft mode. Additionally, some embodiments of the present invention utilize the functionality of GPS 81018 in mobile device application 81124 to geofence the e-bike. In such an embodiment, where the rider wishes to invoke a valet mode, the rider specifies a particular location, and a range from that location, wherein pedaling or otherwise rolling of the e-bike is feasible but difficult. If the e-bike is moved outside of the geo-fenced region, the e-bike enters the anti-theft mode in which pedaling or even manually rolling or pushing of the e-bike is prevented.

Importantly, although many of the above embodiments are described in conjunction with an e-bike, such descriptions are described in conjunction with an e-bike for purposes of brevity and clarity. It should be noted, however, that many of the above-described embodiments are particularly well suited to use with various other types of electric vehicles.

### Preventing the Electric Motor from Inducing Chain Tension

Rear suspension assemblies are often utilized on bicycles, such as, for example an e-bike to absorb energy imparted to the rear wheel by the terrain over which the bicycle is being ridden. The use of a rear suspension shock system allows a rider to traverse rougher terrain, at a greater speed and with less fatigue in comparison to riding a bicycle equipped with a rigid rear frame. However, due to the fact that the rear suspension can articulate, the distance between the center chain sprocket and the rear wheel sprocket can change causing changes in chain tightness/tension. Such, suspension induced chain growth and corresponding increase in chain tension can detrimentally affect the operation and feel of the rear suspension during compression and rebound.

In various other embodiments of the present invention, the suspension of the electric vehicle is also adjusted to correspond to the activity of the electric motor of the electric vehicle. For example, in one embodiment, the suspension of the electric vehicle is adjusted using, for example, an active valve to adjust the suspension to correspond to the amount of assist provided by the electric motor of the electric vehicle.

In certain e-bikes, such as for example, mid-drive motor e-bikes, the electric motor drives the e-bike using the same chain used by the rider when pedaling. As a result, operation of the electric motor, when powering such an e-bike, will necessarily impart tension to the chain. As stated above, in certain conditions, increased chain tension will detrimentally affect the operation and feel of the rear suspension.

In various embodiments of the present invention, in certain conditions, such as when the e-bike is moving downhill, the electric motor is controlled to prevent the electric motor from increasing chain tension. In one such embodiment, vehicle data and/or rider-related data such as, for example, inclinometer readings, pressure on seat post, seat post position, rider's body position, pedal/crank arm position and rotational speed (e.g., pedals parallel to the ground and not moving), and the like are used to determine when the e-bike is moving downhill. Moreover, in various embodiments of the present invention, the sensor(s) used to determine when the e-bike is moving downhill can be, but is not limited to, an accelerometer, an optical detector (e.g., infrared motion sensor), an image capturing device (e.g., optical flow), a combination thereof, or the like. In one embodiment, the inclinometer is able to indicate that the e-bike is going down a small incline (5-15 degrees), down a medium incline (16-30 degrees), down a large incline (31-90 degrees), traversing a flat section, going up a small incline (5-15 degrees), going up a medium incline (16-30 degrees), going up a large incline (31-90 degrees), etc. Although a number of degrees are provided to indicate three different levels of slope, it should be appreciated that there may be more of fewer different breakdowns of slope measurement. For example, in the simplest case it could be whether it is a downward slope (descending) or an inclined slope (ascending). In a more complicated example, there could be different levels for every 5 degrees, 7 degrees, 10 degrees, 15 degrees, or the like). In one embodiment, a crank arm/hub sensor determines whether or not the chain is being rotated based on whether the pedals are moving or are stationary, etc.

Sensors utilized in the present embodiments are comprised of suitable force or acceleration transducer (e.g. strain gage, Wheatstone bridge, accelerometer, hydraulic cylinder, interferometer based, optical, thermal, and acoustic or any suitable combination thereof). Furthermore, the sensors of the present embodiments utilize solid state electronics, electro-mechanical principles, or any other suitable mechanisms. In one embodiment, the sensor of the present invention is a single axis self-powered accelerometer, such as for example ENDEVCO Model 2229C. The 2229C is a comparatively small device with overall dimensions of about 15 mm height by 10 mm diameter, and weighs about 4.9 g. Its power is self-generated and therefore the total power requirements for the e-bike are reduced. In one embodiment, the single axis accelerometer comprises the ENDEVCO 12M1A, which is of the surface-mount type. The 12M1A is a single axis accelerometer comprising a bimorph sending element which operates in the bender mode. This accelerometer is particularly small and light, measuring about 4.5 mm by 3.8 mm by 0.85 mm, and weighs about 0.12 g. In other embodiments, a sensor such as a tri-axial ENDEVCO 67-100 accelerometer is used to determine when the e-bike is moving downhill. This device has overall dimensions of about 23 mm length and 15 mm width, and weighs about 14 g. Other sensors known in the art may be used with the embodiments described herein.

Embodiments of the present invention, then control the output of the e-bike's electric motor to ensure that the electric motor does not increase chain tension. In so doing, embodiments of the present invention allow the rear suspension of the e-bike to operate freely and without unwanted resistance from the chain. In one example, when the vehicle data and/or rider-related data indicates that the e-bike is moving downhill, embodiments of the present invention control the electric motor by placing it into a neutral position (i.e., the electric motor does not increase the amount of tension on the chain).

### Tailoring Motor Output to Control Rider Effort

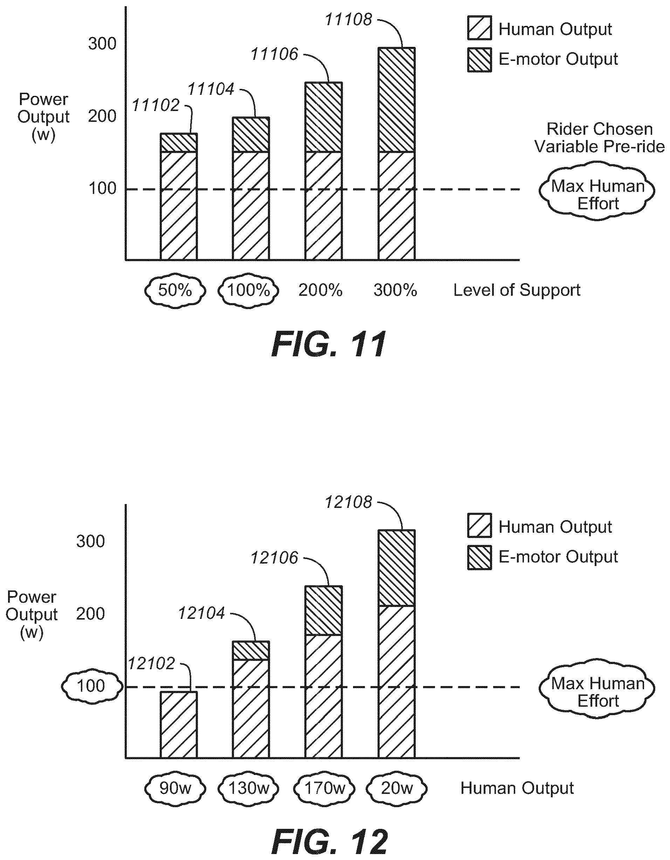

With reference next to Figure 11, in one embodiment of the present invention a rider of, for example, an e-bike, provides rider-related data to control operation of the electric motor of the e-bike. More particularly, in the present embodiment, the e-bike rider specifies a threshold rider-generated power output. The rider then indicates that, should the rider's power output exceed that threshold value, the electric motor will provide assist to the e-bike. Further, in various embodiments of the present invention, the rider is also able to specify the amount or ratio of assist provided by the electric motor of the e-bike compared to the amount by which the rider-generated power output exceeds the threshold value (referred to as a "variable level of support"). As an example, in Figure 11, histogram 11102 illustrates a case where the rider has specified that the electric motor of the e-bike is to provide assist at a ratio of 50% compared to the amount by which the rider-generated power output exceeds the rider specified threshold value of 100 watts. As shown in histogram 11102, when the rider exceeds the threshold value of 100 watts by 50 watts, the electric motor provides 25 watts of assist to the e-bike. As another example, histogram 11104 illustrates a case where the rider has specified that the electric motor of the e-bike is to provide assist at a ratio of 100% compared to the amount by which the rider-generated power output exceeds the rider specified threshold value of 100 watts. As shown in histogram 11104, when the rider exceeds the threshold value of 100 watts by 50 watts, the electric motor provides 50 watts of assist to the e-bike. Histogram 11106 of Figure 11 illustrates a case where the rider has specified that the electric motor of the e-bike is to provide assist at a ratio of 200% compared to the amount by which the rider-generated power output exceeds the rider specified threshold value of 100 watts. As shown in histogram 11106, when the rider exceeds the threshold value of 100 watts by 50 watts, the electric motor provides 100 watts of assist to the e-bike. As a final example, histogram 11108 illustrates a case where the rider has specified that the electric motor of the e-bike is to provide assist at a ratio of 300% compared to the amount by which the rider-generated power output exceeds the rider specified threshold value of 100 watts. As shown in histogram 11102, when the rider exceeds the threshold value of 100 watts by 50 watts, the electric motor provides 150 watts of assist to the e-bike.

In another embodiment of the present invention, a rider selects a desired power output, and the electric motor of the e-bike then contributes only the amount of torque or assist required to meet the rider's desired power limit at any given time. For example, in such an embodiment, at 12102 of Figure 12, the rider has an output of 90W. In the present embodiment, the electric motor of the e-bike contributes 10W to bring the total output up to the rider defined 100W.

With reference next to Figure 12, a graph is provided illustrating another example of an embodiment of the present invention. In all of the histograms of Figure 12, the rider specified threshold value is again set at 100 watts, and the rider has specified that the electric motor of the e-bike is to provide assist at a ratio of 100% compared to the amount by which the rider-generated power output exceeds the rider specified threshold value of 100 watts. As shown in histogram 12102, when the rider does not exceed the threshold value of 100 watts, no assist is provided by the electric motor of the e-bike. As another example, histogram 12104 shows that when the rider exceeds the threshold value of 100 watts by 30 watts, the electric motor provides 30 watts of assist to the e-bike. Histogram 12106 illustrates a case in which the rider exceeds the threshold value of 100 watts by 70 watts. In that example, the electric motor provides 70 watts of assist to the e-bike. Histogram 12108 of Figure 12 illustrates a case where the rider exceeds the threshold value of 100 watts by 110 watts, and the electric motor provides 110 watts of assist to the e-bike.

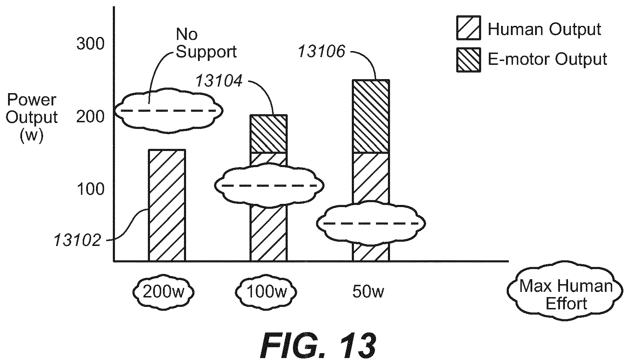

Referring now to Figure 13, a graph is provided to further illustrate that in embodiments of the present invention, multiple rider-related variables can be used to control the operation and output of the electric motor of the e-bike. More particularly, in embodiments of the present invention, an e-bike rider is able to specify a threshold rider-generated power output value, and the rider is further able to specify the amount or ratio of assist provided by the electric motor of the e-bike compared to the amount by which the rider-generated power output exceeds the threshold value. With reference still to Figure 13, As shown in histogram 13102, when the rider does not exceed the threshold value of 200 watts, no assist is provided by the electric motor of the e-bike. As another example, histogram 13104 shows that when the rider exceeds the threshold value of 100 watts by 50 watts, the electric motor provides 50 watts of assist to the e-bike. Histogram 13106 illustrates a case in which the rider exceeds the threshold value of 50 watts by 100 watts. In that example, the electric motor provides 100 watts of assist to the e-bike.

### Range and Mapping Estimation

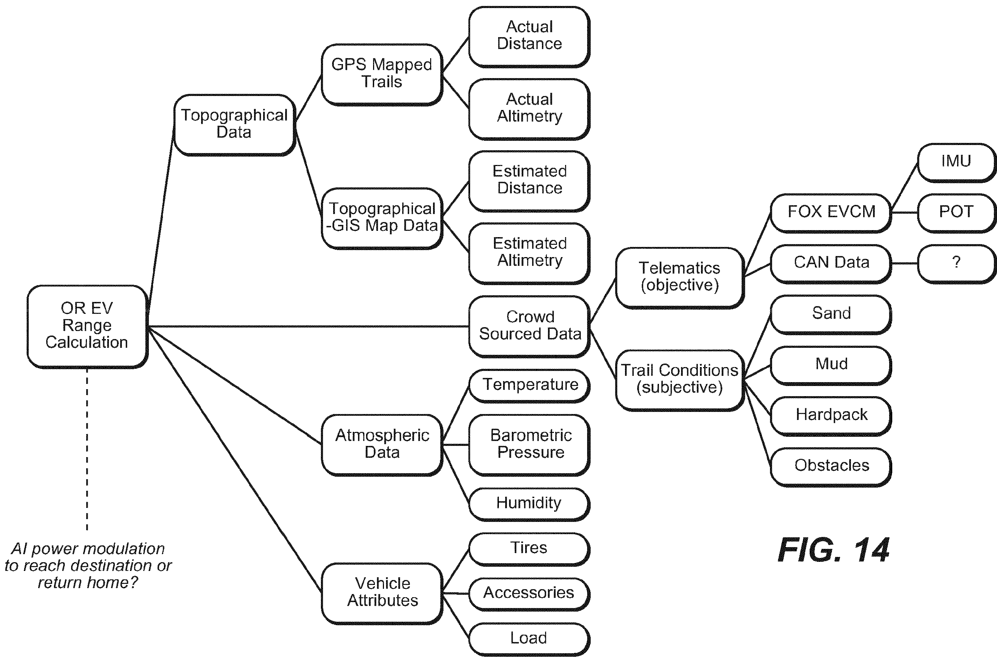

With reference now to Figure 14, a flow diagram of an electric vehicle range estimation is shown in accordance with an embodiment. As described herein, and specifically in Figure 11-13, there are a number of different cases when the user is receiving assistance from the motor. This assistance comes at a price as the battery or batteries can only provide so much charge to the motor for so long an amount of time. If the ride and the motor draw are too large, the rider will discharge the batteries before the electric vehicle can make it to the destination, home from the destination, to a charging location, or the like. In a case where the user can provide pedal assistance, this could mean that the rider will have to get to the destination under their own power and without any motor assistance. In the case where the user cannot provide assistance, it will mean that the user will be stopped at some point along the way.

In one embodiment, the electric vehicle range calculation flow diagram is a power modulation and evaluation process that will identify whether or not the user will have enough power to reach the destination, to reach a number of recharging stops on the way to the destination, to reach the destination and return home, or the like under power from the motor 151M. In one embodiment, the power modulation and evaluation process described herein is performed before the journey starts by the user providing the routing information which can then be evaluated. The result of the evaluation could include an amount of maximum output motor run time, an amount of reduced output motor runtime, an amount of no motor run time, and/or a combination thereof. For example, on ride there could be a downhill portion where the motor output would be little or not used, a flat portion where the assist or motor output would be at a first amount, and some uphill portions where the assist or motor output will be at second higher level or even the highest level. In this case, the power modulation and evaluation process will establish a ride plan that will improve (e.g. provide the best) performance in conjunction with the required amount of motor and batter endurance to ensure the electric vehicle will complete the desired ride.

In one embodiment, the range calculation will use information from one or more sources such as, but not limited to, crowd sourced data, atmospheric data, topographical data, vehicle attributes, and the like.

In one embodiment, atmospheric data will include data such as, but not limited to, temperature, barometric pressure, humidity, and the like.

In one embodiment, crowd sourced data will include data such as, but not limited to, telematics (objective), trail conditions (subjective), and the like.

In one embodiment, telematics data will include data such as, but not limited to, FOX EVCM, and CAN Data.

In one embodiment, FOX EVCM will include information such as, but not limited to, an inertial measurement unit (IMU), POT, and the like.

In one embodiment, trail conditions are subjective and can include information such as, but not limited to, terrain type, e.g., sand, mud, hardpack, obstacles, and the like.

In one embodiment, topographical data will include data such as, but not limited to, GPS mapped trails, topographical -GIS map data, and the like.

In one embodiment, GPS mapped trails will include information such as, but not limited to, actual distance, actual altimetry, and the like.

In one embodiment, topographical -GIS map data will include information such as, but not limited to, estimated distance, estimated altimetry, and the like.

In one embodiment, vehicle attributes will include information such as, but not limited to, tires, accessories, load, and the like.

In one embodiment, the range calculation will also use rider data. For example, historical data that provides rider pace, input energy, stamina, and the like. Health data that can include, level of fitness, stamina, endurance, weight, height, and the like described in further detail herein. In one embodiment, the range calculation can also operate in real time to monitor a rider's heart rate, breathing, and the like. Thus, the performance of the rider is also used by the power modulation and evaluation process in the planning and execution of the ride profile.

In one embodiment, in addition to using the power modulation and evaluation process to develop the tune (or settings) for the ride for a given rider, the power modulation and evaluation process can be used as part of the app, or as part of the control system during the trip to monitor the performance and evaluate the actual performance as compared to the planned performance. In one embodiment, the power modulation and evaluation process can monitor the performance evaluate the actual performance as compared to the planned performance and then automatically and continuously (or every couple of minutes, or other time period) update one or more of the settings of the motor and/or battery profile.

For example, if the rider is having an energetic ride, the power modulation and evaluation process will determine that the motor is being utilized less on the flat terrain and even the uphill portions. In this situation, the power modulation and evaluation process would determine that there is an additional amount of energy available and will begin to calculate the best way to inject the unused energy into another section of the ride.

In contrast, if the rider is having a less energetic ride, the power modulation and evaluation process will determine that the motor is being utilized more on the flat terrain and/or the uphill portions. In this scenario, the power modulation and evaluation process would determine that if the initial plan is unchanged, the vehicle is going to run out of energy before the destination is reached. As such, in one embodiment, the power modulation and evaluation process would begin to automatically calculate the new motor performance requirements to establish a new plan that conserves energy to ensure the destination is reached. In one embodiment, the power modulation and evaluation process may also provide an indicator to the rider letting the rider know of the changes to the initially planned motor and battery performance settings.

Importantly, although many of the above embodiments are described in conjunction with an e-bike, such descriptions are described in conjunction with an e-bike for purposes of brevity and clarity. It should be noted, however, that many of the above-described embodiments are particularly well suited to use with various other types of electric vehicles.

### Zero-G, landing wheel speed, landing profile, jumping profile, airborne adjustments manual and automatic.

In addition to the chain tension discussion which provided a number of examples of actions that cause the electric vehicle to adjust the geometry of the rear wheel with respect to the rest of the vehicle, jumping and/or freefall is difficult on a running electric motor. The motor is turning while in the air which could cause a lot of rear wheel spin.

In one embodiment, as has been established by two wheeled, rear wheel drive vehicle riders (and rear belt driven vehicle riders-such as snow machines which use a track system that provides control similar to the rear wheel), the ability to accelerate the spin of the rear wheel and/or conversely use the rear brake to stop the spinning of the rear wheel while in the air, provides the rider with an ability to "fly" the bike. E.g., accelerate rear wheel rotation to raise the vehicle into a nose-up attitude, slow or stop the rear wheel rotation to lower the vehicle into a nose-down attitude, etc. As such, the ability to control the wheel spin and motor during flight does not allow the electric motor to simply be powered down and/or retracted or otherwise moved during flight. As such, when the bike lands, a number of physical load forces are added to the electric motor, mounting, and connections. Thus, during manufacture, the weight and size of the electric motor and mounts need to be engineered to withstand the same maximum physical landing forces as the vehicle to which it is attached. This can result in a weight gain on the vehicle which is only necessary during maximum jump/freefall events. The rest of the time, the additional weight is little more than a hinderance to performance, range, engine/rider endurance, and the like.

In one embodiment, in conjunction with the valve technology discussed in section (UNK), and one or more sensors of the myriad of different sensors discussed herein (CITE); when the one or more sensors determine that the rear wheel is no longer in contact with "earth", the information can be used to made a jump/freefall type determination. In one embodiment, this determination is made by identification of the rear wheel of the vehicle in the air, in conjunction with an amount of time that has passed since the event began.

For example, if the bike is bunny hopped, the rear wheel is in the air only one, a few, or a portion of a second, and this time period would (in one embodiment) not be considered a freefall or jump as the additional force of the impact would not be greatly affected by the very short time that the rear wheel was in the air. However, if the rear wheel is in the air for a predetermined amount of time, for example, more than two seconds, the system would identify a "freefall Mode". At that time, the controller could access the inputs monitoring the speed of the vehicle (e.g., inputs to include one or more vectors, e.g., forward speed, upward speed, downward speed, etc.,) and calculate the appropriate wheel speed for the landing. Then, when landing, there would be no extra impulse into the motor which would allow the motor to be lighter. In one embodiment, the controller could also use one or more sensors to determine the pitch of the vehicle, the slope of the landing location, the terrain type, and the like and utilize that information to further define the appropriate wheel speed calculation.

In another embodiment, vehicles such as boats, side-by-sides, or other vehicle type do not necessarily include the ability to adjust the flight aspects of the vehicle based on the motor output while the vehicle is in the air. Moreover, in some embodiments, the motor providing output during the flight portion of a jump can be detrimental to other portions of the drive system. For example, while in the water, an electric motor for a boat is providing an output that causes the boat propeller to spin at a certain speed, while the water is providing a significant amount of resistance. If the boat jumps, such that the propeller leaves the water, the immediate removal of the water resistance can cause the motor, propeller, shaft, and/or other components to overspeed which can cause damage to one or more of those components. This concept also works for high-speed jetboats, where keeping the throttle open can damage the pump and chopping the throttle in the air or at high speed will cause a loss of control of the boat. For an electric jet drive, the impeller speed could be managed according to various aspects, such that the risk of a loss of control is mitigated.

Similarly, in a side-by-side, three or more wheeled vehicle, if the driver keeps the foot on the go pedal, the electric engine will cause the wheels to continue to spin during the flight. In one embodiment, the removal of friction will cause the tire to spin faster which could be detrimental to one or more components of the drive train of the vehicle. In one embodiment, the driver may apply the brakes in the air to control or slow the wheel speed.

However, and often more deleteriously, when the vehicle returns to the ground (e.g., lands), the wheel speed (e.g., the wheels are now spinning at a higher rate of speed or have been slowed or stopped in their rotation), will be quickly adjusted by the now existing resistance of the ground. In one embodiment, if the wheels are spinning to fast their rotation will be quickly slowed. In contrast, if the wheels are spinning to slowly (or are stopped) their rotation will be quickly accelerated.

This harsh rotational speed change will provide a number of different forces on a number of the different drive train components. For example, in one embodiment, the harsh rotational speed change at each wheel will be passed to one or more drive axles which will experience a twisting force as the wheel speed no longer matches the rotational speed of the drive axle. In one embodiment, if the drive axle withstands the change, it will pass the force to the differential which will be receiving a different rotational force from the drive shaft. If the differential withstands the change, it will pass the twisting force onto the drive shaft, which passes the force on to a transfer case, then to the engine, etc. Thus, the entire drive train of a vehicle must be built to withstand such forces depending upon the manufacturer or designer performance envelope. In some cases, this would require one or more of the drive train components to be heavier, stronger, and more expensive. Again, this extra weight would be only needed for a maximum envelope performance event.

In one embodiment, the amount of time the drive system is out of touch with its terrain (e.g., land, water, etc.) is important to instantly control the motor speed. For example, in a boat propeller example, the control would be to identify the loss of water resistance, and then real time or near real-time reduction in motor output/shaft speed.

In one embodiment, similar to the bike example above, the need to reduce or adjust the wheel speed would only be used if the drive wheel (or wheels) are in the air for a predetermined amount of time, for example, more than a second or two. Once the predetermined amount of time was exceeded, the system would identify a "jump mode". At that time, the controller would access the inputs monitoring the speed of the vehicle (e.g., inputs to include one or more vectors, e.g., forward speed, upward speed, downward speed, etc.,) and calculate the appropriate wheel speed for the landing. Then, when landing, the wheels would be moving at (or near) the appropriate speed and there would be no harsh input to the drive train. In one embodiment, by using a jump mode, the stress range for components of the drive train would be reduced which would allow one or more of the drive train components to be lighter. In one embodiment, the controller could also use one or more sensors to determine the pitch of the vehicle, the slope of the landing location, the terrain type, and the like and utilize that information to further define the appropriate wheel speed calculation. In one embodiment, a jumping and/or landing profile could be tailored in advance for a specific vehicle and included in the application B41124.

### Extension of Concepts to Side-by-Sides (not just Bikes and Motorcycles), Rock Crawling, Motor at each wheel

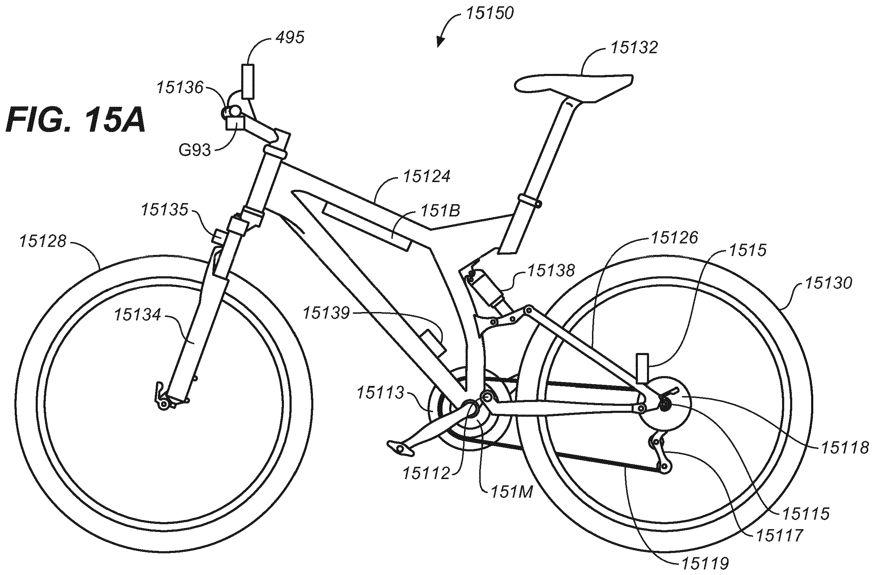

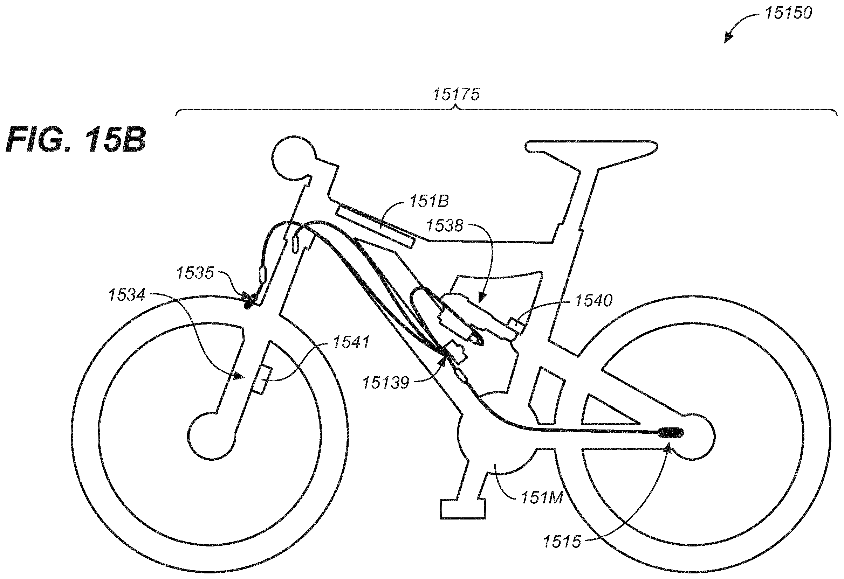

With reference now to Figure 15A, a schematic side view of an e-bike 15150 is shown in accordance with an embodiment. In the following discussion, and for purposes of clarity, an e-bike is utilized as the example electric vehicle in Figures 15A and 15B. However, in another embodiment, the electric vehicle could be on any one of a variety of electric vehicles disclosed herein.

E-bike 15150 has a frame 15124 with a suspension system comprising a swing arm 15126 that, in use, is able to move relative to the rest of frame 15124; this movement is permitted by, inter alia, active valve damper 15138. The front forks 15134 also provide a suspension function via a damping assembly in at least one fork leg; as such the e-bike 15150 is a full suspension e-bike (such as an ATB or mountain e-bike). However, the embodiments described herein are not limited to use on full suspension e-bikes. Instead, the following discussion is intended to include electric vehicles having front suspension only, rear suspension only, seat suspension only, other components with a damper of some type, a combination of two or more different suspensions, and the like.

In one embodiment, swing arm 15126 is pivotally attached to the frame 15124 at pivot point 15112 which is located above the bottom bracket axis. Although pivot point 15112 is shown in a specific location, it should be appreciated that pivot point 15112 can be found at different distances from bottom bracket axis depending upon the rear suspension configuration. The use of the location of pivot point 15112 herein is provided as one embodiment of the location. E-bike 50 includes a front wheel 15128 which is coupled to the frame 15124 via front fork 15134 and a rear wheel 15130 which is coupled to the frame 15124 via swing arm 15126. A seat 15132 is connected to the frame 15124 (in one embodiment via a seatpost) in order to support a rider of the e-bike 15150.

The front wheel 15128 is supported by a front fork 15134 which, in turn, is secured to the frame 15124 by a handlebar assembly 15136. The rear wheel 15130 is connected to the swing arm 15126 at rear axle 15115. Active valve damper 15138 is positioned between the swing arm 15126 and the frame 15124 to provide resistance to the pivoting motion of the swing arm 15126 about pivot point 15112. Thus, the illustrated e-bike 15150 includes a suspension member between swing arm 15126 and the frame 15124 which operate to substantially reduce rear wheel 15130 impact forces from being transmitted to the rider of the e-bike 15150.

E-bike 15150 is driven by a chain 15119 that is coupled with both front sprocket assembly 15113 and rear sprocket 15118. As the rider pedals the front sprocket assembly 15113 is rotated about bottom bracket axis and a force is applied to chain 15119 which transfers the energy to rear sprocket 15118. Chain tension device 15117 provides a variable amount of tension on chain 15119.

E-bike 15150 also has an electric motor 151M and a battery 151B. In general, electric motor 151M refers to one or more of the electric motors of Figures 1-4. In one embodiment, battery 151B refers to one or more of the electric batteries of Figures 1-4. In one embodiment, electric motor 151M is located at or near the center of the pedal and front sprocket assembly 15113.

In one embodiment, e-bike 15150 includes one or more sensors, connected components, or the like for sensing changes of terrain, e-bike 15150 pitch, roll, yaw, speed, acceleration, deceleration, or the like. For example, in one embodiment, a sensor 1515 is positioned proximate the rear axle 15115 of e-bike 15150. In another embodiment, a sensor 15135 is positioned proximate to front fork 15134. In yet another embodiment, both sensor 1515 and sensor 15135 are on e-bike 15150.

In one embodiment, the angular orientation of the one or more sensors is movable through a given range, thereby allowing alteration of a force component sensed by the sensor in relation to a force (vector) input. In one embodiment, the value for the range is approximately 120°. In one embodiment, the value for the range is approximately 100°. It is understood that the sensor can be moved or mounted in any suitable configuration and allowing for any suitable range of adjustment as may be desirable. That is useful for adjusting the sensitivity of the sensor to various anticipated terrain and e-bike speed conditions (e.g., the e-bike speed affects the vector magnitude of a force input to the e-bike wheel for constant amplitude terrain disparity or "bump/dip." Varying size bumps and dips also affect the vector input angle to the wheel for constant e-bike speed).

In one embodiment, e-bike 15150 includes a switch G93. In general, switch G93 is a positional switch. In one embodiment, switch G93 is a multi-positional switch, an upshift/downshift type of switch, a button type switch, or the like. For example, switch G93 would be a 2-position switch, a 3-position switch, a switch that can cycle through a number of different settings (similar to a gear shift), or the like.

In one embodiment, switch G93 is wireless. For example, switch G93 would communicate with the mobile device 895 (or other components) via Bluetooth, NFC, WiFi, a hotspot, a cellular network, or any other type of wireless communications.

In one embodiment, switch G93 could be wired and could communicate with mobile device 895 by way of an input port such as USB, micro USB, or any other connectable wired configuration that will allow switch G93 to be communicatively coupled with mobile device 895. In one embodiment, switch G93 could have both wired and wireless communication capabilities.

Although switch G93 is shown mounted to handlebar assembly 15136, it should be appreciated that switch G93 could be mounted in a different location on the electric vehicle, on a mount coupled to the electric vehicle, or the like. in one embodiment, the location of switch G93 is modifiable and is located on the electric vehicle based on a rider's preference.

Referring now to Figure 15B, a line drawing of a side view of a control system 15175 on e-bike 15150 having one or more sensors is shown in accordance with one embodiment. In one embodiment, the one or more sensors provide the obtained sensor data to controller 15139 which uses the sensor data to monitor the terrain and make adjustments to one or more of motor 151M, battery 151B output, suspension components, and the like. In one embodiment, control system 15175 is equipped with pitch detection, that can recognize when e-bike 15150 is climbing, traversing or descending. In one embodiment, controller 15139 includes a lithium ion battery as the main user interface and can be charged (e.g., via micro USB) on or off the e-bike 15150.

In one embodiment, controller 15139 monitors the terrain at a rate of a thousand times per second and make adjustments in a matter of milliseconds. For example, in one embodiment, sensors on the fork, rear axle, and/or main frame read bump input at the wheel and the pitch angle of the e-bike 15150, and send the obtained sensor data to the controller 15139 at a rate, such as but not limited to, 1,000 times per second. Thus, by placing sensors on the frame and/or proximate both wheels, the controller 15139 processes data from the terrain to constantly adjust one or more of motor 151M, battery 151B output, suspension components, and the like for maximum efficiency and control.

In general, one or more sensors are used for sensing characteristics (or changes to characteristics) such as terrain, environment, temperature, vehicle speed, vehicle pitch, vehicle roll, vehicle yaw, component activity, or the like. It is understood that the one or more sensors may be imbedded, moved, mounted, or the like, in any suitable configuration and allowing for any suitable range of adjustment as may be desirable.

The one or more sensors may be any suitable force or acceleration transducer (e.g. strain gage, wheatstone bridge, accelerometer, hydraulic, interferometer based, optical, thermal, infrared emitter and receiver, time of flight sensor, LiDar based measurement, hall effect sensor, or any suitable combination thereof). The sensors may utilize solid state electronics, electro-mechanical principles or MEMS, or any other suitable mechanisms.. In one embodiment, the sensor comprises a single axis self-powered accelerometer, such as for example ENDEVCO^{®} model 2229C. The 2229C is a comparatively small device with overall dimensions of approximately 15 mm height by 10 mm diameter, and weighs 4.9 g. Its power is self-generated and therefore the total power requirements for the e-bike 15150 are reduced; this is an advantage, at least for some types of e-bikes, where overall weight is a concern. An alternative single axis accelerometer is the ENDEVCO^{®} 12M1A, which is of the surface-mount type. The 12M1A is a single axis accelerometer comprising a bimorph sending element which operates in the bender mode. This accelerometer is particularly small and light, measuring about 4.5 mm by 3.8 mm by 0.85 mm, and weighs 0.12 g. In one embodiment, the sensor may be a triaxial accelerometer such as the ENDEVCO^{®} 67-100. This device has overall dimensions of about 23 mm length and 15 mm width, and weighs 14 g.

In one embodiment, sensor 15141 (or any/all of the recited sensors) is a measurement type sensor such as an infrared based time of flight sensor and the like. In one embodiment, the measurement type sensor continuously and/or repeatedly measures a distance from the e-bike fork steerer tube, crown, or other fixed point to the lower stanchion, wheel, fender, ground or other fixed point. By monitoring the distance between these points, the measurement type sensor can determine the suspension travel used and the speed at which the e-bike fork suspension compressed and rebounded. The time of flight sensor is a STMicroelectronics sensor and specifically STMicroelectronics sensor model VL53L0X.

In one embodiment, sensor 15141(or any/all of the recited sensors) is a measurement type sensor such as a hall effect sensor and the like. In one embodiment, the measurement type sensor continuously and/or repeatedly measures a distance from the e-bike fork steerer tube, crown, or other fixed point to the lower stanchion, wheel, fender, ground or other fixed point. By monitoring the distance between these points, the measurement type sensor can determine the suspension travel used and the speed at which the e-bike fork suspension compressed and rebounded. The hall effect sensor is an Allegro Micro Systems sensor and specifically Allegro Micro Systems sensor model A1454.

In one embodiment, sensor 15140 (or any/all of the recited sensors) is a measurement type sensor such as an infrared based time of flight sensor and the like. In one embodiment, the measurement type sensor continuously and/or repeatedly measures a distance from the from the bottom shock eyelet, supporting shock substructure, or other fixed point to the top shock eyelet, supporting substructure, or other fixed point. By monitoring the distance between these points, the measurement type sensor can determine the shock suspension travel used and the speed at which the shock suspension compressed and rebounded. In one embodiment, the time of flight sensor is a STMicroelectronics sensor model VL53L0X.

In one embodiment, sensor 15140 (or any/all of the recited sensors) is a measurement type sensor such as a hall effect sensor and the like. In one embodiment, the measurement type sensor continuously and/or repeatedly measures a distance from the from the bottom shock eyelet, supporting shock substructure, or other fixed point to the top shock eyelet, supporting substructure, or other fixed point. By monitoring the distance between these points, the measurement type sensor can determine the shock suspension travel used and the speed at which the shock suspension compressed and rebounded. The hall effect sensor is an Allegro Micro Systems sensor and specifically Allegro Micro Systems sensor model A1454.

In one embodiment, sensor 1515 and/or sensor 15135 is a measurement type sensor such as radar, 2D and 3D imagers, ultrasonic sensor, photoelectric sensors, LiDar, and the like. In one embodiment, the measurement type sensor continuously and/or repeatedly measures a distance from the sensor to the ground. By monitoring the distance from the sensor to the ground, the measurement type sensor can determine the existence of an upcoming obstacle (e.g., height changes due to holes, bumps, or other obstacles), a shape or abruptness of the obstacle, etc.

For example, in one embodiment, the sensor could be aimed at a point that is approximately 2 feet in front of the bike. In general, by repeatedly measuring the distance from the sensor to the ground in front of the electric vehicle, any changes in that distance are indicative of an upcoming obstacle.

Although a distance of 2 feet is used in one embodiment, in another embodiment, the distance to the point in front of the bike varies depending upon speed, terrain, and the like. For example, in one embodiment, the distance in front of the bike is defined by user option, factory guidance provided by the damper manufacturer, sensor manufacturer, bike manufacturer, damping system controller manufacturer, or the like. In one embodiment, sensor 1515 and/or sensor 15135 is a time of flight sensor. In one embodiment, the time of flight sensor is a STMicroelectronics sensor model VL53L0X.

One or more sensors may be attached to the swing arm 15126 directly, to any link thereof, to an intermediate mounting member, to front fork 15134, or to any other portion or portions of the e-bike 15150 as may be useful. In one embodiment, one or more sensors could be fixed to an unsprung portion of the e-bike 15150, such as for example the swing arm assembly 15126. In one embodiment, one or more sensors are fixed to a sprung portion of the e-bike 15150, such as the frame 15124.

In general, one or more sensors may be integrated with the electric vehicle structure and data processing system as described in U.S. Pat. Nos. 6,863,291; 4,773,671; 4,984,819; 5,390,949; 5,105,918; 6,427,812; 6,244,398; 5,027,303 and 6,935,157; each of which is herein incorporated, in its entirety, by reference. Sensors and valve actuators (e.g. electric solenoid or linear motor type-note that a rotary motor may also be used with a rotary actuated valve) may be integrated herein utilizing principles outlined in SP-861-Vehicle Dynamics and Electronic Controlled Suspensions SAE Technical Paper Series no. 910661 by ShioGaki et. al. for the International Congress and Exposition, Detroit, Mich., Feb. 25-Mar. 1, 1991 which paper is incorporated herein, in its entirety, by reference. Further, sensors and valves, or principles, of patents and other documents incorporated herein by reference, may be integrated one or more embodiments hereof, individually or in combination, as disclosed herein.

In one embodiment, a mobile device 895 is coupled with handlebar assembly 15136. In one embodiment, the mobile device 895 is the only sensor on the e-bike 15150. In one embodiment, e-bike 15150 sensors includes a mobile device 895 and one or more of sensors 1515, 15135, (sensors 15140, 15141 of Figure 15B), etc. Although mobile device 895 is shown mounted to handlebar assembly 15136, it should be appreciated that the mobile device 895 could be mounted in a different location on e-bike 15150, carried in a rider's backpack, pocket, or the like, stored in another location on the bike (e.g., under the seat pouch, etc.), or the like, and still provide the sensor input information.

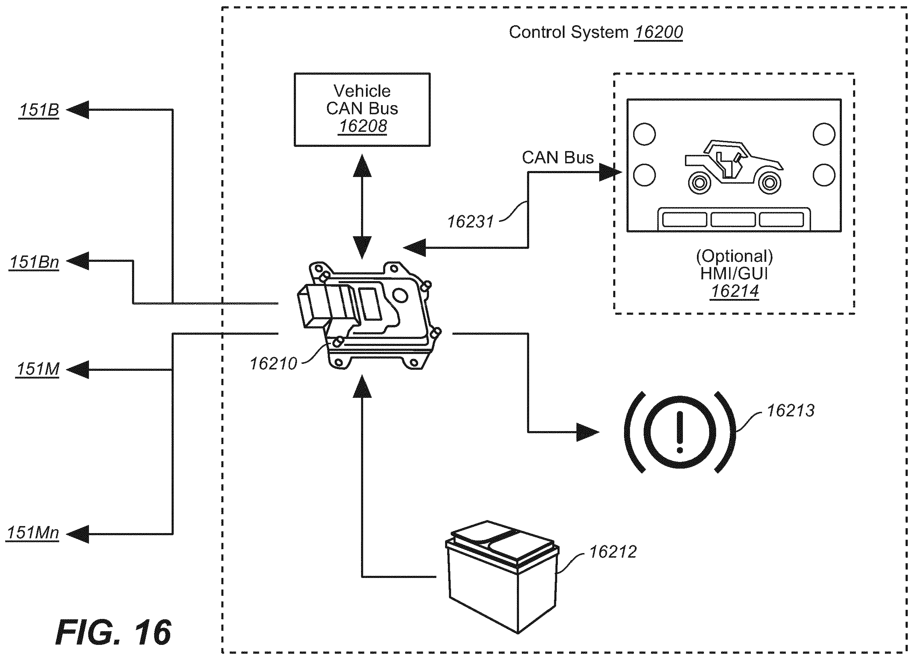

Referring now to Figure 16, a block diagram of a modular control system is shown in accordance with an embodiment. Modular control system includes a plurality of components such as, one or more batteries 151B and 151Bn (hereinafter battery 151B), one or more motors 151M and 151Mn (hereinafter motor 151M), and a control system 16200.

In one embodiment, there is at least one motor located at one or all of wheels of the electric vehicle. For example, in a four wheeled electric vehicle, there may be a motor 151M located at or about (and providing a driving force to) one many or all of the left front wheel, right front wheel, left rear wheel, and/or right rear wheel.

Although control system 16200 is shown as interacting with one or more batteries 151B and 151Bn and one or more motors 151M and 151Mn, it should be appreciated that the technology is well suited for application in other electronic vehicles such as those described herein.

In one embodiment, control system 16200 includes shimmed damping control (SDC) 16210, vehicle CAN bus 16208, CAN Bus 16231 to an optional human machine interface (HMI) 16214 (or graphical user interface (GUI)), warning 16213, and battery 16212. It should be appreciated that in an embodiment, one or more components shown within control system 16200 would be located outside of control system 16200, and similarly additional components would be located within control system 16200.

In one embodiment, SDC 16210 includes a processor. In one embodiment, SDC 16210 will control each of the plurality of motor 151M and battery 151B coupled with the electric vehicle suspension, determine a type of motor 151M and battery 151B coupled with the electric vehicle, automatically tune the electric vehicle based on the determined type of motor 151M and battery 151B coupled with the electric vehicle, automatically monitor one or more of the motor 151M and battery 151B and any sensors or other input provided to the electric vehicle, and automatically re-tune one or more of the motor 151M and/or battery 151B settings of the electric vehicle suspension based on the input received from any sensors or other input provided to the electric vehicle.

In one embodiment, there is no need for HMI/GUI 16214 within the modular control system 16200. Instead, the motor 151M and/or battery 151B configuration will be identified by the warning 16213 or lack thereof. In another embodiment, there may be motor 151M and/or battery 151B configuration switches instead of an HMI/GUI 16214.

In one embodiment, optional HMI/GUI 16214 is a GUI that presents a motor 151M and/or battery 151B configuration and operational information about the motor 151M and/or battery 151B configuration, e.g., battery 151B settings, motor 151M settings, and the like, in a user interactive format, such as on a display located proximal to a vehicle operator.

In one embodiment, optional HMI/GUI 16214 is configured to present vehicle information in a user interactive format on a display, where the HMI will have a touch input capability to receive an input from a user via a user interaction with the HMI. HMI is also programmable to present motor 151M and/or battery 151B information in a user interactive format on a display.

In one embodiment, the motor 151M and/or battery 151B information includes a plurality of different mode configurations and an identification of which configuration mode is currently active for the motor 151M and/or battery 151B. In one embodiment, the plurality of different mode configurations is user selectable.

If one or more of motor 151M and/or battery 151B are automatically adjustable, in one embodiment, control system 16200 will automatically adjust one or more settings of motor 151M and/or battery 151B based on external conditions such as, weather, terrain, ground type (e.g., asphalt, concrete, dirt, gravel, sand, water, rock, snow, mud, etc.), and the like.

In one embodiment, control system 16200 will automatically adjust one or more settings of motor 151M and/or battery 151B based on one or more sensor inputs received from sensors such as those sensors described herein and/or an inertial gyroscope, an accelerometer, a magnetometer, a steering wheel turning sensor, a single or multi spectrum camera, and the like.

In one embodiment, the control system 16200 characteristics can be set at the factory, manually adjustable by a user, or automatically adjustable by a computing device using environmental inputs and the like. For example, in one embodiment, some or all of the settings for motor 151M and/or battery 151B are automatically adjustable based on user preference, speed, maneuvering, ride type, or the like.

In one embodiment, some of the settings for motor 151M and/or battery 151B are based on electric vehicle sizing and geometry. For example, sizing information includes aspects such as, but not limited to, frame size, wheel size, tire size, crank arm length, handlebar width, component settings, and the like. Geometry information would include features such as, seat height, seat pitch, seat offset, handlebar offset (fore or aft), location of components on handlebar (e.g., brake lever, gear shift, dropper lever, various inputs, etc.), handlebar-to-seat distance, seat-to-pedal distance, seat-to-ground distance, front-to-rear wheel distance, front fork angle, center of gravity (CG), and the like. In one embodiment, some of the settings for motor 151M and/or battery 151B are based on component information such as, but not limited to, full suspension, half suspension, gearing, weight, tires, wheels, cranks, pedals, seat, manufacturer of components, the number of connected components, modifications to vehicle or components (e.g., additions, deletions, changes, etc.) and the like.

In one embodiment, some or all of the information could be obtained by user input, by data communicated from the connected component(s) such as one or more sensors on the vehicle, one or more connected components on the vehicle, the user's mobile device, by data communicated from other networked devices such as a smart scale, smart watch or other smart jewelry that monitors one or more user's biometrics (e.g., heart rate, body mass, temperature, etc.), environmental metrics, or the like.

In one embodiment, some of the settings for motor 151M and/or battery 151B are manually adjustable based on user preference, speed, maneuvering, ride type, or the like.

In one embodiment, the adjustable settings for motor 151M and/or battery 151B are automatically adjustable via a manual user input into the control system 16200. For example, via user interaction with HMI/GUI 16214.

In one embodiment, the adjustable settings for motor 151M and/or battery 151B are automatically adjusted based on external conditions, e.g., sensors detecting damper, vibration, or the like. For example, in a smooth operating environment, e.g., on a highway or smooth road, configuration adjustments may be provided by the user via HMI 16214, or automatically applied by control system 16200, to increase range, increase speed, or any of the other numerous performance adjustments described herein for the electric vehicle.

As described herein, the manual input option includes a user selectable switch, icon on a touch display, or the like at the GUI or HMI, that allows a user to adjust one or more of the settings for motor 151M and/or battery 151B. In one embodiment, the manual option is provided at the GUI or HMI. In one embodiment, the manual option may be one or more switches that allow the use to select one or more pre-defined settings for motor 151M and/or battery 151B.

In an automated mode, control system 16200 automatically adjusts one or more settings for motor 151M and/or battery 151B based on one or more inputs received at the processor of SDC 16210. For example, in one embodiment, the steering inputs, vehicle roll, speed, and the like are detected and/or monitored via one or more sensors on or about the electric vehicle. Similarly, external conditions such as weather, terrain, ground type, and the like are also detected and/or monitored via the one or more sensors on or about the electric vehicle.

Sensors such as but not limited to, accelerometers, sway sensors, suspension changes, visual identification technology (e.g., single or multi spectrum camera's), driver input monitors, steering wheel turning sensors, and the like. For example, one embodiment uses an inertial measurement unit (IMU) to sense rough terrain. One embodiment has an attitude and heading reference system (AHRS) that provides 3D orientation integrating data coming from inertial gyroscopes, accelerometers, magnetometers, and the like. For example, in one embodiment, the AHRS is a GPS aided Microelectromechanical systems (MEMS) based IMU and static pressure sensor.

Moreover, control system 16200 will be able to adjust remotely controllable settings for motor 151M and/or battery 151B automatically and on the fly. In one embodiment, the automated or user selectable settings for motor 151M and/or battery 151B are further adjustable based on actual conditions or as "learned" user settings.

For example, if an operator initially sets the control system 16200 for a given performance envelope. When the sensor feedback causes the control system 16200 to determine that the electric vehicle is no longer within the provided envelope (e.g., a change in range, performance, user input, temperature, or the like), control system 16200 would automatically change the settings for motor 151M and/or battery 151B to provide more appropriate results. For example, if it is determined that the user is providing less energy, the input from motor 151M will have to be increased, and as such, the range would be reduced.

In one embodiment, the operator will override any automatic "on-the-fly" adjustments so that appropriate performance is maintained.

In one embodiment, control system 16200 would modify one or more settings for motor 151M and/or battery 151B to enhance electric vehicle low speed performance during rock crawling and other slow driving activities. However, when the electric vehicle speed is increased, after the slow driving activity is completed, control system 16200 would modify one or more settings for motor 151M and/or battery 151B to enhance the higher speed performance.

In one embodiment, the control system 16200 will have a tune that is preprogrammed with settings for motor 151M and/or battery 151B that will provide additional performance enhancements and capabilities during slow maneuvering such as rock crawling, 4-wheeling, and other slower driving/obstacle clearing activities where maximum suspension articulation is desired, needed, and/or warranted.

In one embodiment, a configuration file is used to store all configurable settings associated with the operation of motor 151M and/or battery 151B. In one embodiment, it is a text file formatted as a YAML (a recursive acronym for "YAML Ain't Markup Language") file. These settings files are used by various programs to (1) program or "flash" settings to the controller's flash memory or (2) read out and save controller settings to a file.

In one embodiment, motor 151M and/or battery 151B could be used on the electric vehicle to provide enhanced performance. For example, if there is a motor 151M at each of the electric vehicle wheels, during high speed operation, each of the motors 151M would be communicatively coupled such that they were each providing a similar amount of drive to their associated wheel. In one embodiment, they are communicatively coupled with each other (wired or wirelessly). In one embodiment, they are communicatively coupled via control system 16200 (wired or wirelessly).

In one embodiment, during a turning operation, the amount of drive provided by each of the motors 151M could be varied to provide additional turn capabilities. For example, the motors 151M driving the wheels on the outer radius side of the turn could provide a given amount of drive to each wheel, while the motors 151M driving the wheels on the inner radius side of the turn could provide an amount of drive that is less than the given amount of drive provided to the outside wheels.

In one embodiment, in a low speed environment for example, e.g., such as while navigating an obstacle, rock crawling, stream fording, mud bogging, etc., the amount of drive provided by each of the motors 151M at each of the wheels could be varied to provide additional turn capabilities, suspension articulation capabilities, reduced wheel spin, increased traction, and the like. In one embodiment, the controller could also utilize vehicle component information such as tire type, tire size, tire air pressure, and the like to optimize the motor output for maximum performance based on a number of sensor inputs and on the environment being traversed.

In one embodiment, such as during rock crawling, the amount of time the drive system is out of touch with its terrain (e.g., land, water, etc.) is important to instantly control wheel speed, slipping, spinning, and the like. For example, in a rock crawling example, the control system would identify the loss of resistance on a tire that has left a first rock and is now in the air heading toward a second rock. In real time or near real-time, a reduction in motor output/shaft speed would be provided to the wheel in the air. Then, when the wheel made contact with the second rock, it would be sensed by a sensor and then power could then begin to be reapplied to the wheel. As such, instead of the wheel spinning when it first meets the rock (due to the in-air spinning) causing an amount of slip, the wheel would begin to apply the rotational drive on the rock when the wheel is in contact with the rock.

In one embodiment, the amount of drive given to the wheel traversing from rock one to rock two could additionally be adjusted as the wheel begins to support more and more of the electric vehicle weight on the second rock. For example, the wheel may initially contact the second rock with only 5% of its normal weight bearing amount. As the electric vehicle continues to move forward, the weight bearing amount on the wheel would continue to increase. In one embodiment, as the weight bearing amount on the wheel is increased, the amount of power to the wheel from the electric motor could also be increased. In so doing, the wheel of the rock crawling electric vehicle would be providing its maximum contribution to the specific and real-time situation. In one embodiment, by having a number of motors such that there is a motor to control each axle, each wheel, or the like, the electric vehicle would be able to obtain maximum contribution from each wheel in real-time.

In one embodiment, having a number of motors such that there is a motor to control each axle, each wheel, or the like, the electric vehicle will also be capable of doing things that vehicles are not normally capable of doing. For example, if there is a motor on the front axle and another motor on the rear axle, the front and rear wheels could be driven in different directions. For example, in a bogy, sandy, or muddy environment, if the electric vehicle were stuck in the sand, the front wheels could begin to drive toward the rear while the rear wheels drove toward the front. The wheels could then all be driven toward the front, or the rear, and such differing axle direction rotations would provide rocking, and other motions that would help the electric vehicle out of its predicament.

In another example, if there is a motor driving each wheel, one or more of the wheels of the electric vehicle could be driven in different directions than one or more of the other wheels. For example, in a bogy, sandy, or muddy environment, if the electric vehicle were stuck in the sand, the front right wheel could begin to drive forward while the front left wheel is driven to the rear. Similarly, the rear right wheel could begin to drive forward while the rear left wheel is driven to the rear. This would result in an articulation of the electric vehicle that will provide not only forward or backward movement (which may dig a tire hole deeper), but also an amount of side movement that would help extract the wheels from there sandy holes. Although, one example, is described, it should be appreciated that the wheels could all be driven toward the front, or the rear, or in different combinations which would provide rocking and other motions that would help the electric vehicle overcome its predicament.

### Range extension

In one embodiment, range extension is realized by keeping the rider using the lower power mode setting of the electric vehicle 15150 (e.g., lowest power mode, mid-power mode, maximum power mode) as possible without detrimentally affecting the performance. For example, the rider is kept in the lowest or mid-power mode with only short periods of max power mode as needed. This would result in an increase in range.

In one embodiment, by using a lateral component of the pitch sensor data to use it like a roll sensor to determine the vehicle lean, e.g., to detect when the vehicle is leaning such as in a corner. Typically in a corner the rider loses speed so coming out of the corner, the cornering situation would be identified as well as the rider coming out of the corner. At that time, the power setting would automatically switch to max power mode to regain the lost speed. As the lost speed is regained, the power mode would automatically be returned to a lower power mode setting (e.g., low or mid power mode.).

Similarly, in a climbing situation, as the electric vehicle 15150 inclines to commence the uphill climb, a sensor (such as a pitch sensor, inclinometer, mobile device 895, or the like), would determine the change in pitch and the power setting would automatically switch to a higher power mode up to and including the max power mode to make up for the hill induced additional riding effort required. Then, as the incline of the electric vehicle 15150 decreases (e.g., as the hill climb is completed) and the electric vehicle 15150 is returning to a level pitch angle (e.g., riding on level or nearly level ground), as the lost speed is regained by the user's own input to the pedals, the power mode would automatically be returned to a lower power mode setting (e.g., low or mid power mode.).

### Rideability-user experience improvement

In one embodiment, an electric vehicle 15150 such as an e-bike rewards a high pedal cadence to give max power output. In one embodiment, the cranks must actually be moving for the electric motor 151M to provide powered input. In one embodiment, when a rider is going downhill, they would be in a tall gear and moving relatively fast. However, in the situation where the bottom of the hill sharply transitions into a steep climb (e.g., a G-out), it is possible for the rider to begin the transition into the uphill in a tall gear which reduces the pedal cadence. In one embodiment, because of the reduced pedal cadence, the power from the electric motor 151M is reduced or becomes non-existent which can result in a cascading effect of a further slowing of the pedal cadence ultimately resulting in a stall of the electric vehicle 15150.

Prior to the technology disclosed herein, the only sure way to overcome the cascading effect is for the rider to transition to a shorter gear as they approach the bottom of the hill (in a blind turn environment or the like) in preparation for a (possibly non-existent) sharp transition into a climbing configuration e.g., a G-out. However, when there is no G-out situation at the bottom of the hill (e.g., around the blind corner), the rider would then have to transition back to a taller gear. This scenario is costly to a rider in performance and speed when there is no G-out situation as they have transitioned to a shorter gear and therefore did not obtain the maximum output from the downhill section. This scenario is also costly to a rider if they forget to make the transition to the shorter gear and end up in a G-out and the accompanying cascading stall of the electric vehicle 15150.

However, using the technology disclosed herein, in one embodiment, as the rider approaches the bottom of the hill, the sensor (e.g., pitch sensor, inclinometer, forward looking sensor, GPS input, or the like) will detect the changing pitch of the electric vehicle 15150. If the pitch of the electric vehicle 15150 quickly transitions to an incline, then similar to the climbing situation discussed herein, as the electric vehicle 15150 hits the G-out and commences the uphill climb, the change in pitch would be recognized and the power setting would automatically switch to a max power mode such that the rider could maintain speed and pedal cadence and have time to change to a shorter gear without worrying about stalling out the electric vehicle 15150.

Riding a wheelie. In one embodiment, when riding a wheelie the rider will normally feather the rear brake to maintain the wheelie and not loop out (e.g.., fall over backwards or fall off the back of the vehicle). In one embodiment, when riding a wheelie on an electric vehicle 15150, the output from the electric motor 151M can be automatically adjusted, based on input to the controller 15139 from a pitch sensor or the like, to slow the rear wheel such that the rider does not loop out, even if the rider is not properly feathering the back brake.

In one embodiment, if the rider wants to maintain a wheelie, the pitch sensor, inclinometer, or the like can be used in conjunction with the automated electric motor 151M control to modify the power output of the electric motor 151M such that the front wheel of the electric vehicle 15150 is maintained in the air but the electric vehicle 15150 does not loop out.

Jumping. In one embodiment, when flying through the air during a jump, the rider will use the rotation of the rear wheel to control the pitch of the flying electric vehicle 15150. For example, adding power to the back wheel will pitch the front end up and in contrast, applying the rear brake will pitch the front end down. In one embodiment, similar to the wheelie discussion, the electric motor automatic inputs from the controller 15139 along with the pitch sensor information received by the controller 15139 can be used to maintain an appropriate attitude of the electric vehicle 15150 while it is in flight.

Lofting the front wheel. In one embodiment, a rider may want to loft only the front wheel of the electric vehicle 15150 to go over an obstacle (e.g., a rock, branch, gully, ditch, etc.). In one embodiment, as the rider attempts to lift the front wheel, the rider will add additional power to the rear wheel, via the crank. However, in a "dumb" e-bike scenario, when the rider adds the additional power to the crank it is common for the electric motor 151M to also increase its power output (e.g., increased pedal cadence, etc.). In so doing, it is possible that the increase in power to the rear wheel from the electric motor 151M will cause an out-of-control situation. The situation could be a too-high of a front wheel loft, which could cause a loop-out, cause the rear wheel of the e-bike to impact the obstacle while the e-bike is still in an upward pitch attitude, cause a situation where the front wheel does not end up on top of the obstacle, and as such the rider is then unable to use the front wheel contact with the obstacle to lever the rear wheel up and over the obstacle, and the like.

In one embodiment, similar to riding a wheelie, the output from the electric motor 151M can be automatically adjusted, based on input to the controller 15139 (such as from a pitch sensor, handlebar stress meter, pressure sensors, front looking camera or other front looking obstacle sensor, or the like), to add additional power to the rear wheel, to not add additional power to the rear wheel, or to reduce power to the rear wheel. For example, in one embodiment, the output from the electric motor 151M is automatically adjusted by the controller 15139 based on input to the controller 15139 (such as from a pitch sensor, handlebar stress meter, pressure sensors, front looking camera or other front looking obstacle sensor, or the like), such that the power to the rear wheel of electric vehicle 15150 is reduced after the front wheel is lofted such that the rider does not accidently loop out.

In one embodiment, the output from the electric motor 151M is automatically adjusted by the controller 15139 based on input to the controller 15139 (such as from a pitch sensor, handlebar stress meter, pressure sensors, front looking camera or other front looking obstacle sensor, or the like), such that the power to the rear wheel is increased to assist the rider in the lofting of the front wheel, when the rider pulls up on the handlebars and/or adds additional power to the rear wheel, via the crank, in an attempt to loft the front wheel to surmount an obstacle.

Starting out. In one embodiment, when the electric vehicle 15150 is starting from a standstill, the controller 15139 can adjust the power applied from the electric motor 151M such that the electric vehicle 15150 does not lurch quickly to speed. In one embodiment, the starting out feature can also include input from a sensor (such as a pitch sensor, GPS, forward looking sensor, or the like) to determine if the electric vehicle 15150 is starting out on flat ground, a downhill slope, an uphill slope and even a steepness of the uphill slope. In one embodiment, the amount of power applied from the electric motor 151M during the starting from the standstill can be adjusted by the controller 15139 based on the received sensor input.

For example, if the electric vehicle 15150 is starting out on a flat or decline, the controller 15139 can slowly increase the initial power applied from the electric motor 151M such that the electric vehicle 15150 does not lurch quickly to speed. In contrast, if the electric vehicle 15150 is starting out on an incline, the controller 15139 can increase the initial power applied from the electric motor 151M such that the electric vehicle 15150 takes off smoothly up the incline without either stalling from a lack of input from the electric motor 151M or lurching quickly to speed from too much input from the electric motor 151M.

Shift event. In one embodiment, a sensor is used to determine if the shifter lever is being actuated (or if the derailer is beginning to move, etc. such as via a capacitive sensor, visual sensor, switch, or the like) to signify a gear change event for the electric vehicle 15150. In one embodiment, when the controller 15139 receives the sensor identified gear change event, the controller 15139 will momentarily cut power from the electric motor 151M to allow the derailer to perform a smooth shift that is not affected by any torque applied to the drive chain by the electric motor 151M. Once the shift event is determined to have occurred (e.g., after a given time period, or another sensor provided input, or the like), the controller 15139 will return the power to the electric motor 151M. As such, the shift will be smooth and the detrimental torque on the derailer during the shifting process will be reduced.

Tractor mode. In one embodiment, the power is modulated to the electric motor 151M such that the rear wheel of electric vehicle 15150 retains traction while also providing drive force. For example, on a climb, pedal bob allows a rider to get a dig (or bite), which provides a burst of power even though there is no uniform thrust up the hill. In one embodiment, the tractor mode can be used to provide that occasional burst of high-power mode style "dig" to keep the electric vehicle 15150 climbing up the hill. In one embodiment, tractor mode could be used to maintain the forward drive capabilities of the electric vehicle 15150 while reducing wheel spin in lower friction environments (e.g., wet, dirt, sand, gravel, mud, etc.).

Switchback trail. In general, switchbacks are made up of a plurality of straight sections, each of which are capped with extreme turn angle events. Switchbacks are often used for quickly ascending or descending steep terrain. In one embodiment, a steering angle sensor will detect the extreme angle of the handlebars (or a lateral sensor to detect the sharp and slow turning of the electric vehicle 15150), as well as other sensor inputs such as a pitch sensor, GPS, forward looking sensor, or the like. This information will be provided to the controller 15139 which will use the information to modify the power output of the electric motor 151M as the electric vehicle 15150 traverses the corners.

For example, when the electric vehicle 15150 is going uphill through the switchbacks, the controller 15139 may add additional power to the electric motor 151M, engage the tractor mode, or the like to provide additional motive force to the electric vehicle 15150 to help the rider maintain their balance and forward motion while traversing the uphill sharp turn.

In contrast, when the electric vehicle 15150 is going downhill through the switchbacks, the controller 15139 may reduce the electric motor 151M power to provide an engine braking effect or the like to reduce the speed of the electric vehicle 15150 thereby helping the rider maintain their balance and control while traversing the downhill sharp turn.

Range extension- point A to point B back to point A. In one embodiment, such as during the travel from point A to point B, x-amount of power was used. The remaining power is less than x-amount. As such, the power consumption for the return trip will need to be reduced such that the electric motor 151M of electric vehicle 15150 will have the range to return to point A.

Rear wheel slip. In one embodiment, such as on a gravel road, rear wheel slip is identified (such as by a bump sensor, spin sensor, etc.). When the rear wheel slip is identified, the power is reduced such that it is not wasted on the slippage of the rear wheel of electric vehicle 15150, but instead remains available for future utilization.

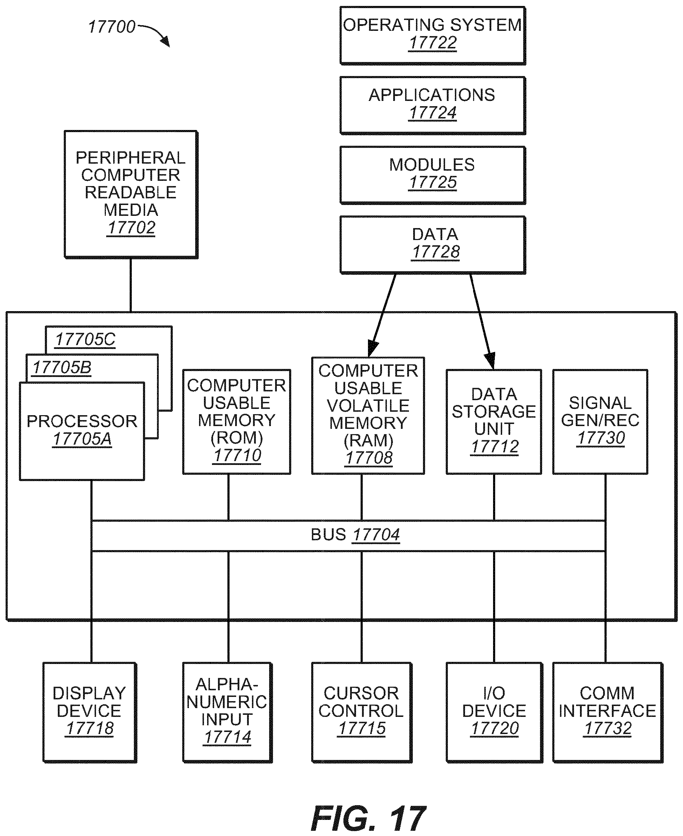

With reference now to Figure 17, an example computer system 17700 is shown. In the following discussion, computer system 17700 is representative of a system or components that may be used with aspects of the present technology. In one embodiment, different computing environments will only use some of the components shown in computer system 17700.

In general, controller 15139 can include some or all of the components of computer system 17700. In different embodiments, controller 15139 can include communication capabilities (e.g., wired such as ports or the like, and/or wirelessly such as near field communication, Bluetooth, WiFi, or the like) such that some of the components of computer system 17700 are found on controller 15139 while other components could be ancillary but communicatively coupled thereto (such as a mobile device, tablet, computer system or the like). For example, in one embodiment, controller 15139 can be communicatively coupled to one or more different computing systems to allow a user (or manufacturer, tuner, technician, etc.) to adjust or modify any or all of the programming stored in controller 15139. In one embodiment, the programming includes computer-readable and computer-executable instructions that reside, for example, in non-transitory computer-readable medium (or storage media, etc.) of controller 15139 and/or computer system 17700.

In one embodiment, computer system 17700 includes an address/data/service bus 17704 for communicating information, and a processor 17705A coupled to bus 17704 for processing information and instructions. As depicted in Figure 17, computer system 17700 is also well suited to a multi-processor environment in which a plurality of processors 17705A, 17705B, and 17705C are present. Conversely, computer system 17700 is also well suited to having a single processor such as, for example, processor 17705A. Processors 17705A, 17705B, and 17705C may be any of various types of microprocessors. Computer system 17700 also includes data storage features such as a computer usable volatile memory 17708, e.g., random access memory (RAM), coupled to bus 17704 for storing information and instructions for processors 17705A, 17705B, and 17705C.

Computer system 17700 also includes computer usable non-volatile memory 17710, e.g., read only memory (ROM), coupled to bus 17704 for storing static information and instructions for processors 17705A, 17705B, and 17705C. Also present in computer system 17700 is a data storage unit 17712 (e.g., a magnetic disk drive, optical disk drive, solid state drive (SSD), and the like) coupled to bus 17704 for storing information and instructions. Computer system 17700 also can optionally include an alpha-numeric input device 17714 including alphanumeric and function keys coupled to bus 17704 for communicating information and command selections to processor 17705A or processors 17705A, 17705B, and 17705C. Computer system 17700 also can optionally include a cursor control device 17715 coupled to bus 17704 for communicating user input information and command selections to processor 17705A or processors 17705A, 17705B, and 17705C. Cursor control device may be a touch sensor, gesture recognition device, and the like. Computer system 17700 of the present embodiment can optionally include a display device 17718 coupled to bus 17704 for displaying information.

Referring still to Figure 17, display device 17718 can be a liquid crystal device, cathode ray tube, OLED, plasma display device or other display device suitable for creating graphic images and alpha-numeric characters recognizable to a user. Cursor control device 17715 allows the computer user to dynamically signal the movement of a visible symbol (cursor) on a display screen of display device 17718. Many implementations of cursor control device 17715 are known in the art including a trackball, mouse, touch pad, joystick, noncontact input, gesture recognition, voice commands, bio recognition, and the like. In addition, special keys on alpha-numeric input device 17714 capable of signaling movement of a given direction or manner of displacement. Alternatively, it will be appreciated that a cursor can be directed and/or activated via input from alpha-numeric input device 17714 using special keys and key sequence commands.

Computer system 17700 is also well suited to having a cursor directed by other means such as, for example, voice commands. Computer system 17700 also includes an I/O device 17720 for coupling computer system 17700 with external entities. For example, in one embodiment, I/O device 17720 is a modem for enabling wired or wireless communications between computer system 17700 and an external network such as, but not limited to, the Internet or intranet. A more detailed discussion of the present technology is found below.

Referring still to Figure 17, various other components are depicted for computer system 17700. Specifically, when present, an operating system 17722, applications 17724, modules 17725, and data 17728 are shown as typically residing in one or some combination of computer usable volatile memory 17708, e.g. random-access memory (RAM), and data storage unit 17712. However, it is appreciated that in some embodiments, operating system 17722 may be stored in other locations such as on a network or on a flash drive; and that further, operating system 17722 may be accessed from a remote location via, for example, a coupling to the Internet. The present technology may be applied to one or more elements of described computer system 17700.

Computer system 17700 also includes one or more signal generating and receiving device(s) 17730 coupled with bus 17704 for enabling computer system 17700 to interface with other electronic devices and computer systems. Signal generating and receiving device(s) 17730 of the present embodiment may include wired serial adaptors, modems, and network adaptors, wireless modems, and wireless network adaptors, and other such communication technology. The signal generating and receiving device(s) 17730 may work in conjunction with one (or more) communication interface 17732 for coupling information to and/or from computer system 17700. Communication interface 17732 may include a serial port, parallel port, Universal Serial Bus (USB), Ethernet port, Bluetooth, thunderbolt, near field communications port, WiFi, Cellular modem, or other input/output interface. Communication interface 17732 may physically, electrically, optically, or wirelessly (e.g., via radio frequency) couple computer system 17700 with another device, such as a mobile phone, radio, or computer system.

### GPS overlay, virtual comp, two bikes communication

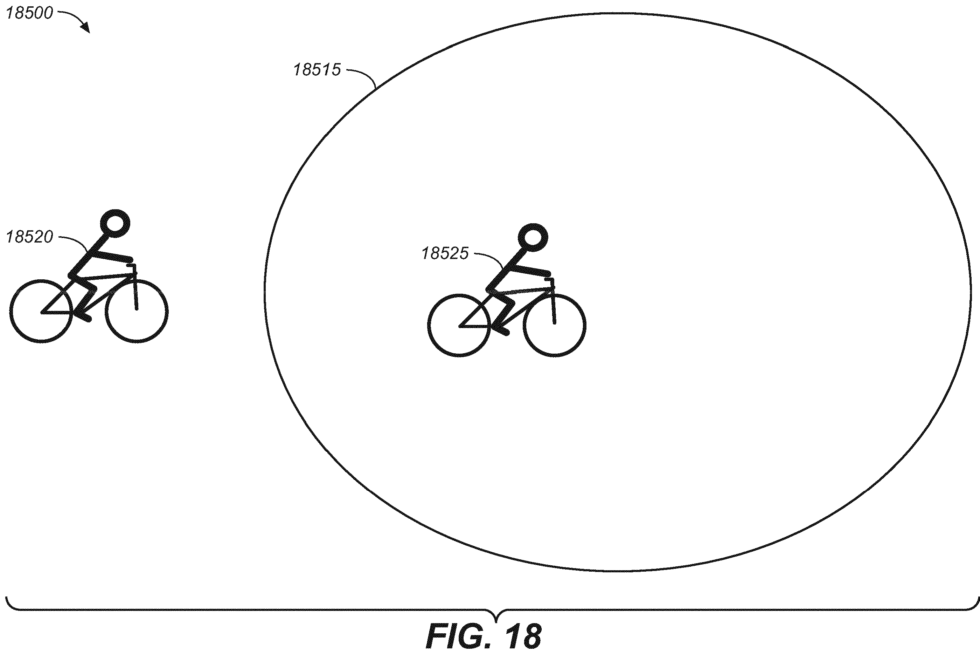

Referring now to Figure 18, a high-level view 18500 of a defined area is shown in accordance with an embodiment. In one embodiment, the user' mobile device 895 will include location information that is pulled into the mobile device application 81124. The location information could be GPS location, WiFi location information, Cellular network location information, or any information that could be used by the mobile device 895 to obtain location information.

For example, in one embodiment, the mobile device application 81124 receives input information includes location information that would define an area 18515 (such as a geofence, elevation level, terrain type, or the like). When the mobile device 895 enters into the area 18515 (as shown by bike 18525 inside area 18515 and bike 18520 outside of area 18515), the mobile device application 81124 would change one or more of the settings for motor 151M and/or battery 151B to match pre-established settings for motor 151M and/or battery 151B for the given area.

In one embodiment, the update to the settings for motor 151M and/or battery 151B could be automatically performed or could be provided as an "advisory" to the rider to modify the settings for motor 151M and/or battery 151B to the geofence area pre-established settings for motor 151M and/or battery 151B. In one embodiment, the location based pre-established settings for motor 151M and/or battery 151B could further be adjusted by the in-mobile device application 81124 settings based on the other inputs, settings, rider skills, electric vehicle performance envelope, other electric vehicle component specs and/or settings, and the like.

For example, in one embodiment a new rider would receive a first set of pre-established settings for motor 151M and/or battery 151B when they entered area 18515, while an expert rider (or intermediate rider) would receive a second different set of pre-established settings for motor 151M and/or battery 151B when the entered area 18515. This differentiation of settings could also occur between bike types, e.g., a road bike entering into area 18515 would likely (but may not necessarily) receive different pre-established settings for motor 151M and/or battery 151B that that of a gravel bike, mountain bike, etc. Moreover, the entering into area 18515 could provide a multitude of possible automatic settings based on the rider information in the mobile device application 81124, information such as rider skill level, bike type, one or more components on the bike, rider motivation, and the like.

In one embodiment, in addition to having automatic or pre-established settings for motor 151M and/or battery 151B, there can also be peer generated settings for motor 151M and/or battery 151B that will be provided, such as in a custom mode, to application users for download and utilization.

For example, trail x is ridden by Johnny Pro and he records his settings for motor 151M and/or battery 151B (or tune) and uploads them for the mobile device application 81124 (Johnny does trail x). Another rider could then download Johnny Pro's settings (e.g., the tune Johnny does trail x) and use then use those specific settings for motor 151M and/or battery 151B to ride trail x (or to ride other trails).

Similarly, Franky Speed could ride his bike with specific components thereon, record his settings for motor 151M and/or battery 151B and upload them for the mobile device application 81124. Another user with a bike having the same (or similar) specific components thereon (or same bike model, brand, year, etc.) would be able to find the custom tune for her similar bike and download that custom Franky Speed motor 151M and/or battery 151B configuration to her mobile device 895. Thus, there could be custom tunes for general locations, different altitudes, specific rides, specific riders, certain bikes, different bike brands, different bike models, bikes with similar components, and the like.

In one embodiment, the customized pre-established settings for motor 151M and/or battery 151B come from FOX or the OEM and might target a specific type of rider or a specific geographic location. In one embodiment, the customized pre-established settings for motor 151M and/or battery 151B are downloaded into a "bullpen" and can then be dragged into the active stack of 5 (or any defined number) tunes. In one embodiment, when a new tune is selected from the bullpen, the replaced tune would then drop down into the bullpen, available for later use (e.g., "Johnny does trail x" replaces "comfort ride 9"). In one embodiment, before dissemination, any customized pre-established settings for motor 151M and/or battery 151B would be sent for approval, and then the approved customized pre-established settings for motor 151M and/or battery 151B would be available for download.

Although, in one embodiment, the customized pre-established settings for motor 151M and/or battery 151B are managed by the mobile device application 81124 or the servers supporting mobile device application 81124 (e.g., the management location from which tunes are uploaded to and downloaded from), in one embodiment, one or more peer generated customized pre-established settings for motor 151M and/or battery 151B could be shared peer-to-peer via WiFi, Bluetooth, NFC, etc. In one embodiment, they could be shared through a middleman such as a webstore, a social network, a riding club, or any combination thereof.

In one embodiment, there could also be a collection of performance data taken during the ride. The collected performance data could be used to compare the settings for motor 151M and/or battery 151B used on the ride with the actual performance of the motor 151M and/or battery 151B. This comparison could be used to determine if the selected settings for motor 151M and/or battery 151B were the most appropriate for the ride, if one or more aspects of the settings for motor 151M and/or battery 151B should be adjusted for performance gains, if the motor 151M and/or battery 151B system was operating correctly, if any faults were detected, or the like.

For example, in the collected performance data it may be determined that the downhill settings for motor 151M and/or battery 151B did not allow for the full performance of one or more electric vehicle components. The determination would be, in one embodiment, that the downhill motor 151M and/or battery 151B setting was too restricted and that a higher energy consumption setting would have allowed for additional performance to be obtained. In another embodiment, the determination would be that the downhill motor 151M and/or battery 151B setting was too high, and that a more restricted setting would have allowed for additional performance to be obtained via motor braking, or the like.

In another embodiment, the determination would be that one or more of the motors 151M and/or battery 151B were not operating correctly and needed an update, replacement, or the like. In yet another embodiment, the determination would be that one or more of the motors 151M and/or battery 151B on the bike was not operating correctly and needed repair, replacement, or the like.

In one embodiment, if the determination was that the pre-established settings for motor 151M and/or battery 151B were not correct for the situation, the result of the comparison would be a modification to the downhill portion of the pre-established settings for motor 151M and/or battery 151B. In one embodiment, if the same downhill modification was needed for the same rider on a number of different rides, there may be further input such as rider weight, height, seat settings, and the like that could be added to the inputs for the mobile device application 81124 and then used to adjust some portion of one or more of the settings for motor 151M and/or battery 151B.

In one embodiment, if the same downhill modification was needed for a number of riders (each of which being shorter than 5'7") that height information could be used to automatically modify the initial settings for motor 151M and/or battery 151B once the height was provided by the rider to the application 81124. Although height is discussed, the recurring feature could be, one or a combination of, rider height, weight, gender, age, body mass, body type, fitness level, heart rate, seat height setting, seat pitch, seat offset, crank arm length, wheel diameter, handlebar width, handlebar offset (fore or aft), pedal type, etc. Further, some or all of the above information could be obtained by user input, by communication between the user's mobile device 895 and networked devices such as a smart scale, smart watch or other smart jewelry that monitors one or more user's biometrics (e.g., heart rate, body mass, temperature, etc.); and the like.

In one embodiment, controller 15139, motor 151M, and/or battery 151B will have wireless communication capabilities. In one embodiment, the wireless communication will occur between a first electric vehicle and a second electric vehicle, or any number of electric vehicles. For example, if two electric vehicles are riding along a trail in a leader-follower style, the controller 15139 on each of the electric vehicles could be communicating such that performance information, motor 151M and/or battery 151B settings, motor 151M and/or battery 151B performance data, and the like is communicated between the lead electric vehicle and the follow electric vehicle (s) (e.g., bicycle, motorcycles, ATVs, snowmobiles, water vehicles, side-by-side, and the like).

In one embodiment, the information from the lead electric vehicle can be used as future (or upcoming event) information to the follow electric vehicle's controller 15139, motor 151M, and/or battery 151B. For example, if the lead electric vehicle reports a freefall event, the follow electric vehicle can prepare for a similar event. Moreover, when the lead vehicle lands the jump (or other freefall event), information about the actual landed wheel speed, motor 151M speed, and the like can be provided from the lead electric vehicle to the follow electric vehicle. This information will provide another input to allow the follow electric vehicle to obtain an optimal wheel speed upon landing.

Similarly, if the front electric vehicle is encountering mud, sand, or other terrain features, that information can also be provided to the follow electric vehicle to allow the follow vehicle to adjust some portion of one or more of the settings for motor 151M and/or battery 151B in preparation for the upcoming terrain.

Thus, in one embodiment, the information (terrain information, suspension settings, sensor data, imagery, and the like) from the lead electric vehicle is provided to the follow electric vehicle, such that the follow electric vehicle's controller 15139 will obtain the terrain, event, or other sensor data before the follow vehicle actually reaches the location of the suspension event (or terrain, etc.) that the front electric vehicle has already encountered. This would allow the follow electric vehicle to prepare the settings for motor 151M and/or battery 151B for the upcoming terrain or event.

In one embodiment, the communication between the two or more electric vehicles can be used to provide a matched ride for riders with two different riding levels. For example, if the lead rider is riding faster than the follow rider, the communication between the two electric vehicles could change the settings for motor 151M and/or battery 151B of the follow electric vehicle to increase the speed thereof and allow the follow rider to keep up with the lead rider.

In one embodiment, if the lead rider is riding faster than the follow rider, the communication between the two electric vehicles could change the settings for motor 151M and/or battery 151B of the lead electric vehicle to decrease motor input, or provide an active resistance to reduce the speed thereof and allow the follow rider to keep up with the lead rider.

For example, if a couple is riding together, and the wife is blowing the doors off of the husband during an uphill section of the ride, the husband's settings for motor 151M and/or battery 151B may be increased to a higher performance or output to allow the husband to keep up with the wife.

In contrast, if the couple is riding together, and the wife is blowing the doors off of the husband during a downhill section of the ride, the husband may be at his riding limit and would not allow his settings for motor 151M and/or battery 151B to be increased to a higher performance or output thereby causing the husband to pass outside of his comfort zone. In one embodiment, the wife will simply zoom away on the downhill and the husband's settings for motor 151M and/or battery 151B can be increased to a higher performance at the bottom of the downhill thereby allowing the husband to catch up to the wife.

In one embodiment, if the couple is riding together, the wife is blowing the doors off of the husband during a downhill section of the ride, and the husband has indicated that he is at his riding limit and will not allow his settings for motor 151M and/or battery 151B to be increased to a higher performance, this information would be communicated to the wife who could then choose to change the settings for motor 151M and/or battery 151B to decrease motor input, or provide an active resistance to reduce her speed and allow the follow rider to keep up.

Alternatively, the wife could not allow her settings for motor 151M and/or battery 151B to be decreased or to provide an active resistance but instead choose to continue blazing down the hill. In one embodiment, the wife will simply zoom away on the downhill and then at the bottom of the hill, the wife's settings for motor 151M and/or battery 151B can be decreased or can provide an active resistance, thereby allowing the husband the opportunity to catch up to the wife.

In one embodiment, as described herein, the rider of the electric bike could input settings for motor 151M and/or battery 151B that will allow the e-bike to perform a ride at the same pace as a professional rider, a friend, or the like. For example, as stated above, the rider could download and implement settings for motor 151M and/or battery 151B based on the data provided by Johnny Pro. In one embodiment, the rider could attempt to maintain the speeds attained by Johnny Pro by having the motor 151M keep the appropriate speed (and braking and the like) in conjunction with the rider's best pedaling and vehicle control inputs. In so doing, the rider would have the chance to experience how fast a professional rider rides, where a professional rider brakes, how hard a professional rider brakes, how hard a professional rider accelerates, etc.

In one embodiment, the rider could implement the Johnny Pro settings for motor 151M and/or battery 151B for an entire ride. In one embodiment, the rider could implement the Johnny Pro settings for motor 151M and/or battery 151B for a section of a ride, for a specific terrain type, for an area where the rider is having difficulty advancing, for an area that is not beyond the rider's comfort zone, and the like. For example, the rider may use the Johnny Pro settings for an uphill portion of a ride, or through a windy stretch, but the rider would not use the Johnny Pro settings for the downhill, through the forest, portion of the ride.

The present technology may be described in the general context of computer-executable instructions, such as program modules, being executed by a computer. Generally, program modules include routines, programs, objects, components, data structures, etc., that perform particular tasks or implement particular abstract data types. The present technology may also be practiced in distributed computing environments where tasks are performed by remote processing devices that are linked through a communications network. In a distributed computing environment, program modules may be located in both local and remote computer-storage media including memory-storage devices.

The examples set forth herein were presented in order to best explain, to describe particular applications, and to thereby enable those skilled in the art to make and use embodiments of the described examples. However, those skilled in the art will recognize that the foregoing description and examples have been presented for the purposes of illustration and example only. The description as set forth is not intended to be exhaustive or to limit the embodiments to the precise form disclosed. Rather, the specific features and acts described above are disclosed as example forms of implementing the Claims.

Reference throughout this document to "one embodiment," "certain embodiments," "an embodiment," "various embodiments," "some embodiments," "various embodiments", or similar term, means that a particular feature, structure, or characteristic described in connection with that embodiment is included in at least one embodiment. Thus, the appearances of such phrases in various places throughout this specification are not necessarily all referring to the same embodiment. Furthermore, the particular features, structures, or characteristics of any embodiment may be combined in any suitable manner with one or more other features, structures, or characteristics of one or more other embodiments without limitation.

## Claims

1. A method for controlling an electric vehicle's electric motor output, said method comprising:
obtaining electric vehicle data;
obtaining user-related data;
receiving input from at least one sensor; (1515, 15135) and
utilizing a controller (15139) to evaluate said electric vehicle data, said user-related data, and said input from said at least one sensor, and automatically tailor an output power curve of said electric motor (151MI) to improve performance for said electric vehicle for a given rate of conservation of a battery (151BI) provided source of power according to the following:
(i) wherein said controller controls a plurality of switches (1104,1106,1108) between said electric
motor and said battery provided source of power, wherein said battery
provided source of power comprises a single battery (151B) which is capable of generating a plurality of output waveforms and said electric motor comprises
a single electric motor, (151M) wherein said plurality of switches will allow said
controller to control a power output of said electric motor by switchably providing said plurality of output waveforms to the single electric motor; or
(ii) wherein said electric motor comprises a plurality of electric motors, (151M1, 151M2, 151M3) said controller utilizing a plurality of switches between said plurality of electric motors and said battery provided source of power to control a power output of one or more of said plurality of said electric motors; or
(iii) wherein said electric motor comprises at least one electric motor and said battery provided source of power comprises a plurality of batteries, (151B1, 151B, 151B2) said controller utilizing a plurality of switches between said at least one electric motor and said plurality of batteries to control a power output of said at least one electric motor;
wherein said obtaining said electric vehicle data comprises:
a size of said electric motor, a size of said battery, an amperage of said battery, and a voltage of said battery;
wherein said obtaining said electric vehicle data further comprises: monitoring the performance of said battery while said electric vehicle is operating;
obtaining at least one updated set of data for said battery based on said monitoring; and
automatically updating said tailored output power curve of said electric motor to obtain said improved performance for said electric vehicle for said given rate of conservation of said battery based on said at least one updated set of data for said battery.

2. The method of Claim 1, wherein said at least one sensor is selected from a group of sensors consisting of: an inclinometer, a pitch sensor, a user's mobile device, an accelerometer, a pressure sensor, and a forward looking sensor.

3. The method of Claim 1 or 2, further comprising:
obtaining route information; and
utilizing said controller to evaluate said electric vehicle data, said user-related data, said input from said at least one sensor, and said route information to automatically tailor said output power curve of said electric motor to obtain said improved performance for said electric vehicle for said given rate of conservation of said battery power.

4. The method of any preceding Claim, propulsion power for said electric vehicle generated by the electric motor and by the user of the electric vehicle turning a crank of said electric vehicle, the method further comprising:
setting an assist threshold based on a wattage input generated by a user turning a crank on said electric vehicle;
monitoring a wattage input generated by said user turning said crank on said electric vehicle;
determining that said assist threshold has been met by said user turning said crank on said electric vehicle; and
utilizing said controller to increase a level of assistance provided by said electric motor when said assist threshold has been met by said user;
and optionally further comprising:
determining that said assist threshold is no longer being met by said user turning said crank on said electric vehicle; and
utilizing said controller to decrease said level of assistance provided by said electric motor.

5. The method of any preceding Claim, propulsion power for said electric vehicle generated by the electric motor and by the user of the electric vehicle turning a crank of said electric vehicle, the method further comprising:
determining, based on said input received from said sensor, that said electric vehicle is ascending a hill; and
utilizing said controller to automatically increase a level of assistance provided by said electric motor;
and/or:
determining, based on said input received from said sensor, that said electric vehicle is going around a corner and has slowed down while going around said corner; and
utilizing said controller to automatically increase a level of assistance provided by said electric motor as said electric vehicle exits said corner until said electric vehicle has returned to a pre-corner speed.

6. The method of any preceding Claim, further comprising:
determining, based on said input received from said sensor, that said electric vehicle is in a freefall condition;
determining a forward ground speed of said electric vehicle; and
utilizing said controller to automatically adjust a level of assistance provided by said electric motor such that a drive wheel is rotating at a speed that is equivalent to a rotational speed said drive wheel would be moving if said electric vehicle was moving forward across said ground at said determined forward ground speed.

7. A system for controlling an electric vehicle's electric motor output, said system comprising:
an input to receive data about said electric vehicle;
an input to receive a user-related data;
at least one sensor (1515,15135) to generate sensor information; and
a controller (15139) to evaluate said data about said electric vehicle, said user-related data, and said sensor information from said at least one sensor, and adapted to automatically tailor an output power curve for an electric motor (151MI) to improve performance for said electric vehicle based on a given rate of conservation of a battery (151BI) provided source of power according to the following:
(i) said controller adapted to control a plurality of switches (1104,1106,1108) between said electric
motor and said battery provided source of power, wherein said battery
provided source of power comprises a single battery (151B) which is capable of
generating a plurality of output waveforms and said electric motor comprises
a single electric motor, (151M) wherein said plurality of switches will allow said
controller to control a power output of said electric motor by switchably providing said plurality of output waveforms to the single electric motor; or
(ii) wherein said electric motor comprises a plurality of electric motors, (151M1, 151M2, 151M3) said controller adapted to utilize a plurality of switches between said plurality of electric motors and said battery provided source of power to control a power output of one or more of said plurality of said electric motors; or
(iii) wherein said electric motor comprises at one electric motor and said battery provided source of power comprises a plurality of batteries, (151B1, 151B, 151B2) said controller adapted to utilize a plurality of switches between said at least one electric motor and said plurality of batteries to control a power output of said at least one electric motor;
wherein said data about said electric vehicle comprises:
a size of said electric motor, a size of said battery, an amperage of said battery, and a voltage of said battery;
wherein said data about said electric vehicle further comprises:
at least one updated set of data for said battery while said electric vehicle is in operation; and
said controller to automatically update said tailored output power curve of said electric motor to obtain said improved performance for said electric vehicle for said given rate of conservation of said battery based on said at least one updated set of data for said battery.

8. The system of Claim 7, wherein said at least one sensor is selected from a group of sensors consisting of: an inclinometer, a pitch sensor, a user's mobile device, an accelerometer, a pressure sensor, and a forward looking sensor.

9. The system of Claim 7 or 8, propulsion power for said electric vehicle generated by the electric motor and by the user of the electric vehicle turning a crank of said electric vehicle, the method further comprising:
an assist threshold based on a wattage input generated by a user turning a crank on said electric vehicle;
a monitor to monitor a wattage input generated by said user turning said crank on said electric vehicle and determine that said assist threshold has been met; and said controller to increase a level of assistance provided by said electric motor when said monitor has determined that said assist threshold has been met;
and optionally further comprising:
said monitor to monitor said wattage input generated by said user turning said crank on said electric vehicle and determine that said assist threshold is no longer being met; and
said controller to decrease said level of assistance provided by said electric motor when said monitor has determined that said assist threshold is no longer being met.

10. An electric vehicle (15150) comprising a system as claimed in any of Claims 7 to 9.

11. An electric vehicle as claimed in claim 10, wherein the electric vehicle is an All-Electric (EV) vehicle, a Fuel Cell Electric Vehicle (FCEV), a Hybrid vehicle, a Plug-in Hybrid vehicle, an e-bike (including but not limited to, Type 1 (Pedal Assist), Type 2 (Throttle Only), and Type 3 (Pedal Assist 28 miles per hour (mph)), a scooter, a motorcycle, a car, a truck, a watercraft, a snow machine, a 3-4 wheeled vehicle, a multi-wheeled vehicle, an all-terrain vehicle (ATV), a utility task vehicle (UTV) or "side-by-side", or an aircraft.

## Patentansprüche

1. Verfahren zur Steuerung der Elektromotorausgabe eines Elektrofahrzeugs, wobei das Verfahren Folgendes umfasst:
Erhalten von Elektrofahrzeugdaten;
Erhalten von benutzerbezogenen Daten;
Empfangen von Eingabe von zumindest einem Sensor (1515, 15135); und
Nutzen einer Steuerung (15139), um die Elektrofahrzeugdaten, die benutzerbezogenen Daten und die Eingabe von dem zumindest einen Sensor zu evaluieren und eine Ausgabeleistungskurve des Elektromotors (151MI) automatisch anzupassen, um Leistung für das Elektrofahrzeug für eine gegebene Konservierungsrate einer durch eine Batterie (151BI) bereitgestellten Leistungsquelle gemäß dem Folgenden zu verbessern:
(i) wobei die Steuerung eine Vielzahl von Schaltern (1104, 1106, 1108) zwischen dem Elektromotor und der durch die Batterie bereitgestellten Leistungsquelle steuert, wobei die durch die Batterie bereitgestellte Leistungsquelle eine einzelne Batterie (151B) umfasst, die in der Lage ist, eine Vielzahl von Ausgabewellenformen zu erzeugen, und der Elektromotor einen einzelnen Elektromotor (151M) umfasst, wobei die Vielzahl von Schaltern der Steuerung ermöglichen wird, eine Leistungsausgabe des Elektromotors durch schaltbares Bereitstellen der Vielzahl von Ausgabewellenformen an den einzelnen Elektromotor zu steuern; oder
(ii) wobei der Elektromotor eine Vielzahl von Elektromotoren (151M1, 151M2, 151M3) umfasst, wobei die Steuerung eine Vielzahl von Schaltern zwischen der Vielzahl von Elektromotoren und der durch die Batterie bereitgestellten Leistungsquelle nutzt, um eine Leistungsausgabe von einem oder mehreren aus der Vielzahl von Elektromotoren zu steuern; oder
(iii) wobei der Elektromotor zumindest einen Elektromotor umfasst und die durch die Batterie bereitgestellte Leistungsquelle eine Vielzahl von Batterien (151B1, 151B, 151B2) umfasst, wobei die Steuerung eine Vielzahl von Schaltern zwischen dem zumindest einen Elektromotor und der Vielzahl von Batterien nutzt, um eine Leistungsausgabe des zumindest einen Elektromotors zu steuern;
wobei das Erhalten der Elektrofahrzeugdaten Folgendes umfasst:
eine Größe des Elektromotors, eine Größe der Batterie, eine Stromstärke der Batterie und eine Spannung der Batterie;
wobei das Erhalten der Elektrofahrzeugdaten ferner Folgendes umfasst:
Überwachen der Leistung der Batterie, während das Elektrofahrzeug in Betrieb ist;
Erhalten von zumindest einem aktualisierten Datensatz für die Batterie basierend auf dem Überwachen; und
automatisches Aktualisieren der angepassten Ausgabeleistungskurve des Elektromotors, um die verbesserte Leistung für das Elektrofahrzeug für die gegebene Konservierungsrate der Batterie basierend auf dem zumindest einen aktualisierten Datensatz für die Batterie zu erhalten.

2. Verfahren nach Anspruch 1, wobei der zumindest eine Sensor ausgewählt ist aus einer Gruppe von Sensoren bestehend aus: einem Neigungsmesser, einem Steigungssensor, einer mobilen Vorrichtung eines Benutzers, einem Beschleunigungsmesser, einem Drucksensor und einem nach vorne gerichteten Sensor.

3. Verfahren nach Anspruch 1 oder 2, ferner umfassend:
Erhalten von Routeninformationen; und
Nutzen der Steuerung, um die Elektrofahrzeugdaten, die benutzerbezogenen Daten, die Eingabe von dem zumindest einen Sensor und die Routeninformationen zu evaluieren, um die Ausgabeleistungskurve des Elektromotors automatisch anzupassen, um die verbesserte Leistung für das Elektrofahrzeug für die gegebene Konservierungsrate der Batterieleistung zu erhalten.

4. Verfahren nach einem vorhergehenden Anspruch, Antriebsleistung für das Elektrofahrzeug, die durch den Elektromotor und durch den Benutzer des Elektrofahrzeugs, der eine Kurbel des Elektrofahrzeugs dreht, erzeugt wird, wobei das Verfahren ferner Folgendes umfasst:
Festlegen eines Unterstützungsschwellenwertes basierend auf einer Watteingabe, die durch einen Benutzer erzeugt wird, der eine Kurbel an dem Elektrofahrzeug dreht;
Überwachen einer Watteingabe, die durch den Benutzer erzeugt wird, der die Kurbel an dem Elektrofahrzeug dreht;
Bestimmen, dass der Unterstützungsschwellenwert durch den Benutzer, der die Kurbel an dem Elektrofahrzeug dreht, erreicht worden ist; und
Nutzen der Steuerung, um ein Niveau an Unterstützung zu erhöhen, das durch den Elektromotor bereitgestellt wird, wenn der Unterstützungsschwellenwert durch den Benutzer erreicht worden ist;
und optional ferner umfassend:
Bestimmen, dass der Unterstützungsschwellenwert durch den Benutzer, der die Kurbel an dem Elektrofahrzeug dreht, nicht länger erreicht wird; und
Nutzen der Steuerung, um das Niveau an Unterstützung, das durch den Elektromotor bereitgestellt wird, zu verringern.

5. Verfahren nach einem vorhergehenden Anspruch, Antriebsleistung für das Elektrofahrzeug, die durch den Elektromotor und durch den Benutzer des Elektrofahrzeugs, der eine Kurbel des Elektrofahrzeugs dreht, erzeugt wird, wobei das Verfahren ferner Folgendes umfasst:
Bestimmen, basierend auf der Eingabe, die von dem Sensor empfangen wird, dass das Elektrofahrzeug einen Hügel hinauffährt; und
Nutzen der Steuerung, um ein Niveau an Unterstützung, das durch den Elektromotor bereitgestellt wird, automatisch zu erhöhen;
und/oder:
Bestimmen, basierend auf der Eingabe, die von dem Sensor empfangen wird, dass das Elektrofahrzeug um eine Ecke geht und sich verlangsamt hat, während es um die Ecke geht; und
Nutzen der Steuerung, um ein Niveau an Unterstützung, das durch den Elektromotor bereitgestellt wird, automatisch zu erhöhen, wenn das Elektrofahrzeug die Ecke verlässt, bis das Elektrofahrzeug zu einer Geschwindigkeit vor der Ecke zurückgekehrt ist.

6. Verfahren nach einem vorhergehenden Anspruch, ferner umfassend:
Bestimmen, basierend auf der Eingabe, die von dem Sensor empfangen wird, dass das Elektrofahrzeug in einem Freifallzustand ist;
Bestimmen einer Vorwärtsbodengeschwindigkeit des Elektrofahrzeugs; und
Nutzen der Steuerung, um ein Niveau an Unterstützung, das durch den Elektromotor bereitgestellt wird, automatisch einzustellen, sodass sich ein Antriebsrad mit einer Geschwindigkeit dreht, die äquivalent zu einer Drehgeschwindigkeit ist, die das Antriebsrad bewegen würde, wenn sich das Elektrofahrzeug vorwärts über den Boden mit der bestimmten Vorwärtsbodengeschwindigkeit bewegen würde.

7. System zur Steuerung der Elektromotorausgabe eines Elektrofahrzeugs, wobei das System Folgendes umfasst:
eine Eingabe, um Daten über das Elektrofahrzeug zu empfangen;
eine Eingabe, um benutzerbezogene Daten zu empfangen;
zumindest einen Sensor (1515, 15135), um Sensorinformationen zu erzeugen; und
eine Steuerung (15139), um die Daten über das Elektrofahrzeug, die benutzerbezogenen Daten und die Sensorinformationen von dem zumindest einen Sensor zu evaluieren, und ausgelegt, um eine Ausgabeleistungskurve für einen Elektromotor (151MI) automatisch anzupassen, um Leistung für das Elektrofahrzeug basierend auf einer gegebenen Konservierungsrate einer durch eine Batterie (151BI) bereitgestellten Leistungsquelle gemäß dem Folgenden zu verbessern:
(i) die Steuerung ist ausgelegt, um eine Vielzahl von Schaltern (1104, 1106, 1108) zwischen dem Elektromotor und der durch die Batterie bereitgestellten Leistungsquelle zu steuern, wobei die durch die Batterie bereitgestellte Leistungsquelle eine einzelne Batterie (151B) umfasst, die in der Lage ist, eine Vielzahl von Ausgabewellenformen zu erzeugen, und der Elektromotor einen einzelnen Elektromotor (151M) umfasst,
wobei die Vielzahl von Schaltern der Steuerung ermöglichen wird, eine Leistungsausgabe des Elektromotors durch schaltbares Bereitstellen der Vielzahl von Ausgabewellenformen an den einzelnen Elektromotor zu steuern; oder
(ii) wobei der Elektromotor eine Vielzahl von Elektromotoren (151M1, 151M2, 151M3) umfasst, wobei die Steuerung dazu ausgelegt ist, eine Vielzahl von Schaltern zwischen der Vielzahl von Elektromotoren und der durch die Batterie bereitgestellten Leistungsquelle zu nutzen, um eine Leistungsausgabe von einem oder mehreren aus der Vielzahl von Elektromotoren zu steuern; oder
(iii) wobei der Elektromotor einen Elektromotor umfasst und die durch die Batterie bereitgestellte Leistungsquelle eine Vielzahl von Batterien (151B1, 151B, 151B2) umfasst, wobei die Steuerung dazu ausgelegt ist, eine Vielzahl von Schaltern zwischen dem zumindest einen Elektromotor und der Vielzahl von Batterien zu nutzen, um eine Leistungsausgabe des zumindest einen Elektromotors zu steuern;
wobei die Daten über das Elektrofahrzeug Folgendes umfassen:
eine Größe des Elektromotors, eine Größe der Batterie, eine Stromstärke der Batterie und eine Spannung der Batterie;
wobei die Daten über das Elektrofahrzeug ferner Folgendes umfassen:
zumindest einen aktualisierten Datensatz für die Batterie, während das Elektrofahrzeug in Betrieb ist; und
die Steuerung, um die angepasste Ausgabeleistungskurve des Elektromotors automatisch zu aktualisieren, um die verbesserte Leistung für das Elektrofahrzeug für die gegebene Konservierungsrate der Batterie basierend auf dem zumindest einen aktualisierten Datensatz für die Batterie zu erhalten.

8. Verfahren nach Anspruch 7, wobei der zumindest eine Sensor ausgewählt ist aus einer Gruppe von Sensoren bestehend aus: einem Neigungsmesser, einem Steigungssensor, einer mobilen Vorrichtung eines Benutzers, einem Beschleunigungsmesser, einem Drucksensor und einem nach vorne gerichteten Sensor.

9. System nach Anspruch 7 oder 8, Antriebsleistung für das Elektrofahrzeug, die durch den Elektromotor und durch den Benutzer des Elektrofahrzeugs, der eine Kurbel des Elektrofahrzeugs dreht, erzeugt wird, wobei das Verfahren ferner Folgendes umfasst:
einen Unterstützungsschwellenwert basierend auf einer Watteingabe, die durch einen Benutzer erzeugt wird, der eine Kurbel an dem Elektrofahrzeug dreht;
einen Monitor, um eine Watteingabe zu überwachen, die durch den Benutzer erzeugt wird, der die Kurbel an dem Elektrofahrzeug dreht, und zu bestimmen, dass der Unterstützungsschwellenwert erreicht worden ist; und
die Steuerung, um ein Niveau an Unterstützung zu erhöhen, das durch den Elektromotor bereitgestellt wird, wenn der Monitor bestimmt hat, dass der Unterstützungsschwellenwert erreicht worden ist;
und optional ferner umfassend:
den Monitor, um die Watteingabe zu überwachen, die durch den Benutzer erzeugt wird, der die Kurbel an dem Elektrofahrzeug dreht, und zu bestimmen, dass der Unterstützungsschwellenwert nicht länger erreicht wird; und
die Steuerung, um das Niveau an Unterstützung, das durch den Elektromotor bereitgestellt wird, zu verringern, wenn der Monitor bestimmt hat, dass der Unterstützungsschwellenwert nicht länger erreicht wird.

10. Elektrofahrzeug (15150), umfassend ein System nach einem der Ansprüche 7 bis 9.

11. Elektrofahrzeug nach Anspruch 10, wobei das Elektrofahrzeug ein reines Elektro(EV-)Fahrzeug, ein Brennstoffzellen-Elektrofahrzeug (FCEV), ein Hybridfahrzeug, ein Plug-in-Hybridfahrzeug, ein E-Bike (beinhaltend, aber nicht beschränkt auf Typ 1 (Pedalunterstützung), Typ 2 (nur Gas) und Typ 3 (Pedalunterstützung 28 Meilen pro Stunde (mph)), ein Roller, ein Motorrad, ein Auto, ein LKW, ein Wasserfahrzeug, eine Schneemaschine, ein 3-4-Rad-Fahrzeug, ein Mehrradfahrzeug, ein Geländefahrzeug (ATV), ein Nutzfahrzeug (UTV) oder "Side-by-Side" oder ein Luftfahrzeug ist.

## Revendications

1. Procédé permettant de contrôler une sortie de moteur électrique d'un véhicule électrique, ledit procédé comprenant :
l'obtention de données de véhicule électrique ;
l'obtention de données relatives à l'utilisateur ;
la réception d'une entrée en provenance d'au moins un capteur (1515, 15135) ; et
l'utilisation d'un contrôleur (15139) pour évaluer lesdites données de véhicule électrique, lesdites données relatives à l'utilisateur, et
ladite entrée provenant dudit au moins un capteur, et concevoir automatiquement une courbe d'énergie de sortie dudit moteur électrique (151MI) pour améliorer les performances dudit véhicule électrique pour un taux donné de conservation d'une source d'énergie fournie par une batterie (151BI) selon ce qui suit :
(i) ledit contrôleur contrôlant une pluralité de commutateurs (1104, 1106, 1108) entre ledit moteur électrique et ladite source d'énergie fournie par batterie, ladite source d'énergie fournie par batterie comprenant une seule batterie (151B) qui est capable de générer une pluralité de formes d'onde de sortie et ledit moteur électrique comprenant un seul moteur électrique (151M), ladite pluralité de commutateurs permettant audit contrôleur de contrôler une sortie d'énergie dudit moteur électrique en fournissant de manière commutable ladite pluralité de formes d'onde de sortie au seul moteur électrique ; ou
(ii) ledit moteur électrique comprenant une pluralité de moteurs électriques (151M1, 151M2, 151M3), ledit contrôleur utilisant une pluralité de commutateurs entre ladite pluralité de moteurs électriques et ladite source d'énergie fournie par batterie pour contrôler une sortie d'énergie d'un ou plusieurs de ladite pluralité desdits moteurs électriques ; ou
(iii) ledit moteur électrique comprenant au moins un moteur électrique et ladite source d'énergie fournie par batterie comprenant une pluralité de batteries, (151B1, 151B, 151B2) ledit contrôleur utilisant une pluralité de commutateurs entre ledit au moins un moteur électrique et ladite pluralité de batteries pour contrôler une sortie d'énergie dudit au moins un moteur électrique ;
ladite obtention desdites données de véhicule électrique comprenant :
une taille dudit moteur électrique, une taille de ladite batterie, un ampérage de ladite batterie et une tension de ladite batterie ;
ladite obtention desdites données de véhicule électrique comprenant en outre :
la surveillance des performances de ladite batterie pendant le fonctionnement dudit véhicule électrique ;
l'obtention d'au moins un ensemble de données mis à jour pour ladite batterie sur la base de ladite surveillance ; et
la mise à jour automatique de ladite courbe d'énergie de sortie conçue dudit moteur électrique pour obtenir ladite performance améliorée pour ledit véhicule électrique pour ledit taux de conservation donné de ladite batterie sur la base dudit au moins un ensemble de données mis à jour pour ladite batterie.

2. Procédé de la revendication 1, ledit au moins un capteur étant sélectionné dans un groupe de capteurs constitué par : un inclinomètre, un capteur d'inclinaison, un dispositif mobile d'un utilisateur, un accéléromètre, un capteur de pression et un capteur orienté vers l'avant.

3. Procédé de la revendication 1 ou 2, comprenant en outre :
l'obtention d'informations d'itinéraire ; et
l'utilisation dudit contrôleur pour évaluer lesdites données de véhicule électrique, lesdites données relatives à l'utilisateur, ladite entrée provenant dudit au moins un capteur, et lesdites informations d'itinéraire pour concevoir automatiquement ladite courbe d'énergie de sortie dudit moteur électrique afin d'obtenir ladite performance améliorée pour ledit véhicule électrique pour ledit taux de conservation donné de ladite énergie de batterie.

4. Procédé d'une quelconque revendication précédente, l'énergie de propulsion pour ledit véhicule électrique étant générée par le moteur électrique et par l'utilisateur du véhicule électrique tournant une manivelle dudit véhicule électrique, le procédé comprenant en outre :
la définition d'un seuil d'assistance sur la base d'une entrée de puissance générée par un utilisateur tournant une manivelle sur ledit véhicule électrique ;
la surveillance d'une entrée de puissance générée par ledit utilisateur tournant ladite manivelle sur ledit véhicule électrique ;
la détermination que ledit seuil d'assistance a été atteint par ledit utilisateur tournant ladite manivelle sur ledit véhicule électrique ; et
l'utilisation dudit contrôleur pour augmenter un niveau d'assistance fourni par ledit moteur électrique lorsque ledit seuil d'assistance a été atteint par ledit utilisateur ;
et comprenant en outre éventuellement :
la détermination que ledit seuil d'assistance n'est plus atteint par ledit utilisateur tournant ladite manivelle sur ledit véhicule électrique ; et
l'utilisation dudit contrôleur pour diminuer ledit niveau d'assistance fourni par ledit moteur électrique.

5. Procédé d'une quelconque revendication précédente, l'énergie de propulsion pour ledit véhicule électrique étant générée par le moteur électrique et par l'utilisateur du véhicule électrique tournant une manivelle dudit véhicule électrique, le procédé comprenant en outre :
la détermination, sur la base de ladite entrée reçue en provenance dudit capteur, que ledit véhicule électrique monte une colline ; et
l'utilisation dudit contrôleur pour augmenter automatiquement un niveau d'assistance fourni par ledit moteur électrique ;
et/ou :
la détermination, sur la base de ladite entrée reçue en provenance dudit capteur, que ledit véhicule électrique prend virage et a ralenti tout en prenant un virage ; et
l'utilisation dudit contrôleur pour augmenter automatiquement un niveau d'assistance fourni par ledit moteur électrique tandis que ledit véhicule électrique sort dudit virage jusqu'à ce que ledit véhicule électrique revienne à une vitesse avant virage.

6. Procédé d'une quelconque revendication précédente, comprenant en outre :
la détermination, sur la base de ladite entrée reçue en provenance dudit capteur, que ledit véhicule électrique est dans un état de chute libre ;
la détermination d'une vitesse au sol avant dudit véhicule électrique ; et
l'utilisation dudit contrôleur pour régler automatiquement un niveau d'assistance fourni par ledit moteur électrique de sorte qu'une roue motrice soit en rotation à une vitesse équivalente à une vitesse de rotation à laquelle la roue motrice tournerait si ledit véhicule électrique avançait sur ledit sol à ladite vitesse au sol avant déterminée.

7. Système destiné à contrôler la sortie de moteur électrique d'un véhicule électrique, ledit système comprenant :
une entrée pour recevoir des données concernant ledit véhicule électrique ;
une entrée pour recevoir des données relatives à l'utilisateur ;
au moins un capteur (1515, 15135) pour générer des informations de capteur ; et
un contrôleur (15139) pour évaluer lesdites données concernant ledit véhicule électrique, lesdites données relatives à l'utilisateur,
et lesdites informations de capteur provenant dudit au moins un capteur, et adaptées pour concevoir automatiquement une courbe d'énergie de sortie pour un moteur électrique (151MI) afin d'améliorer les performances dudit véhicule électrique sur la base d'un taux de conservation donné d'une source d'énergie fournie par batterie (151BI) selon ce qui suit :
(i) ledit contrôleur est adapté pour contrôler une pluralité de commutateurs (1104, 1106, 1108) entre ledit moteur électrique et ladite source d'énergie fournie par batterie, ladite source d'énergie fournie par batterie comprenant une seule batterie (151B) qui est capable de générer une pluralité de formes d'onde de sortie et ledit moteur électrique comprenant un seul moteur électrique, (151M)
ladite pluralité de commutateurs permettant audit contrôleur de contrôler une sortie de d'énergie dudit moteur électrique en fournissant de manière commutable ladite pluralité de formes d'onde de sortie au seul moteur électrique ; ou
(ii) ledit moteur électrique comprenant une pluralité de moteurs électriques (151M1, 151M2, 151M3), ledit contrôleur étant adapté pour utiliser une pluralité de commutateurs entre ladite pluralité de moteurs électriques et ladite source d'énergie fournie par batterie pour contrôler une sortie d'énergie d'un ou plusieurs de ladite pluralité desdits moteurs électriques ; ou
(iii) ledit moteur électrique comprenant un moteur électrique et ladite source d'énergie fournie par batterie comprenant une pluralité de batteries, (151B1, 151B, 151B2) ledit contrôleur étant adapté pour utiliser une pluralité de commutateurs entre ledit au moins un moteur électrique et ladite pluralité de batteries afin de contrôler une sortie d'énergie dudit au moins un moteur électrique ;
lesdites données concernant ledit véhicule électrique comprenant :
une taille dudit moteur électrique, une taille de ladite batterie, un ampérage de ladite batterie et une tension de ladite batterie ;
lesdites données concernant ledit véhicule électrique comprenant en outre :
au moins un ensemble de données mis à jour pour ladite batterie pendant le fonctionnement dudit véhicule électrique ; et
ledit contrôleur pour mettre à jour automatiquement ladite courbe d'énergie de sortie conçue dudit moteur électrique afin d'obtenir ladite performance améliorée pour ledit véhicule électrique pour ledit taux donné de conservation de ladite batterie sur la base dudit au moins un ensemble de données mis à jour pour ladite batterie.

8. Système de la revendication 7, ledit au moins un capteur étant sélectionné dans un groupe de capteurs constitué par : un inclinomètre, un capteur d'inclinaison, un dispositif mobile d'un utilisateur, un accéléromètre, un capteur de pression et un capteur orienté vers l'avant.

9. Système de la revendication 7 ou 8, ladite énergie de propulsion pour ledit véhicule électrique étant générée par le moteur électrique et par l'utilisateur du véhicule électrique tournant une manivelle dudit véhicule électrique, le procédé comprenant en outre :
un seuil d'assistance sur la base d'une entrée de puissance générée par un utilisateur tournant une manivelle sur ledit véhicule électrique ;
un dispositif de surveillance pour surveiller une entrée de puissance générée par ledit utilisateur tournant ladite manivelle sur ledit véhicule électrique et déterminer que ledit seuil d'assistance a été atteint ; et
ledit contrôleur pour augmenter un niveau d'assistance fourni par ledit moteur électrique lorsque ledit dispositif de surveillance a déterminé que ledit seuil d'assistance a été atteint ;
et comprenant en outre éventuellement :
ledit dispositif de surveillance pour surveiller ladite entrée de puissance générée par ledit utilisateur tournant ladite manivelle sur ledit véhicule électrique et déterminer que ledit seuil d'assistance n'est plus atteint ; et
ledit contrôleur pour diminuer ledit niveau d'assistance fourni par ledit moteur électrique lorsque ledit dispositif de surveillance a déterminé que ledit seuil d'assistance n'est plus atteint.

10. Véhicule électrique (15150) comprenant un système selon l'une quelconque des revendications 7 à 9.

11. Véhicule électrique selon la revendication 10, ledit véhicule électrique étant un véhicule tout électrique (EV), un véhicule électrique à pile à combustible (FCEV), un véhicule hybride, un véhicule hybride rechargeable, un vélo électrique (comprenant, mais sans s'y limiter, le type 1 (assistance à la pédale), le type 2 (accélérateur uniquement) et le type 3 (assistance à la pédale 28 miles par heure (mph)), un scooter, une moto, une voiture, un camion, un bateau, une motoneige, un véhicule à 3 ou 4 roues, un véhicule à plusieurs roues, un véhicule tout terrain (VTT), un véhicule utilitaire (VUT) ou « côte à côte », ou un aéronef.
